# EUROPEAN PATENT APPLICATION

(11) **EP 1 798 608 A1**
(43) Date of publication of application: **20.06.2007**
(21) Application number: 06025966.0
(22) Date of filing: 14.12.2006
(51) Int. Cl.: G03H 1/02, G03H 1/26, G03C 7/30

(54) **Hologram production method and hologram production system employing silver halide photosensitive material**

(30) Priority: 14.12.2005 JP 2005360737; 13.12.2006 JP 2006336300
(71) Applicant: Fujifilm Corporation, Minato-ku Tokyo (JP)
(72) Inventor: Hara, Takefumi, Minami-Ashigara-shi Kanagawa (JP)
(74) Representative: HOFFMANN EITLE

(57) **Abstract**

A hologram production method comprising steps in which a specific image-converting apparatus, specific hologram exposure apparatus, and specific processor are used, wherein the exposure apparatus is of the type in which partial element holograms are formed on a photosensitive material (1A) by exposing the photosensitive material while moving the exposure head (10A) to continuously scan in a recording direction X and intermittently conveying the photosensitive material in a direction Y, and employs an exposure light source (23) which intermittently illuminates at a frequency of 100 Hz or higher for a period of 1 µs or shorter so as to interlock with an image displayed on an SLM (24). The photosensitive material (1A) is a silver halide photosensitive material having specific features as described in the specification.

## Description

### Background of the Invention

### 1. Field of the Invention

The present invention relates to a hologram production system. More particularly, the invention relates to a system and process for hologram production from digital image date by holographic stereography.

### 2. Description of the Related Art

Hologram production systems heretofore in use have limited applications because it is necessary for the hologram production that an actual object should be placed in front of a holographic recording material and be directly irradiated with a laser light. In addition, it has been difficult to reduce or enlarge the actual image size. With the recent progress of computers, the amount of digital 3-D image information has increased and the technique of obtaining a pseudo-stereoscopic image rotating on a display has come to be extensively employed. However, techniques capable of directly displaying the information as a three-dimensional image are considerably limited.

Although there are stereoscopic displaying by a lenticular process and stereogram displaying with 3-D glasses, such techniques have drawbacks, for example, that the number of viewing directions for parallax is limited, resulting in poor reality, and that the displays are large and expensive. These techniques also are not sufficient to spread.

There is a growing latent desire for three-dimensional image displaying which can be outputted especially as a hard copy. For producing a three-dimensional hard copy from digital information using a hologram, it is attempted to produce a hologram of a digital image by holographic stereography. In Yamaguchi et al., Gazo Denshi Gakkai-shi, Vol.22, No.4, pp.342-345, 1993 "Stereoscopic-Image Hard Copy Technique with Holographic 3-D Printer", a holographic printer for producing a hologram capable of displaying a stereographic image is described. Furthermore, a hologram printer utilizing a stereogram is described also in, e.g., JP-A-10-20747, JP-T-2002-530698 (the term "JP-T" as used therein means a published Japanese translation of PCT patent application), and JP-A-11-249536.

However, in order for this system to be practical, it has been necessary to heighten print productivity, i.e., to improve the speed of printing, while maintaining practically sufficient hologram quality (brightness, resolution, and low noise, thus which means a low haze.).

In processes heretofore in use, holograms of a large size necessitate much time for recording, although ones on a small screen can be printed at a high speed. For example, the recording of one having a size of, e.g., 1 m × 1 m takes a whole day or more and is not productive. Furthermore, the apparatus for the recording is large and is expensive because it necessitates an expensive laser and an expensive shock-absorbing device. These drawbacks coupled with the low productivity have limited the spread of this holography.

In addition, even when users who possess a three-dimensional image in their respective PC's or the like desire to print the image as a hologram, it is difficult for each of the users to possess the hologram printer. Moreover, when users desire to take a portrait, they should go to a place equipped with the hologram printer. Utilization by users is hence limited. It has been desired that a hologram be produced while accepting applications for the drawing of a digital three-dimensional image in a place located as close as possible to the users and equipped with a simple system.

### Summary of the Invention

A subject for the invention is to provide a hologram production system for producing from digital information a three-dimensional image reproduction which has high image quality and, despite this, can be printed at a high speed. Another subject for the invention is to heighten production efficiency by centering capture data obtained in remote places on one place and processing the data there by heightening the printing speed of a printing system and using a data capture system and the printing system in combination so as to enable the printing apparatus, which is expensive and complicated, to be effectively used.

For accomplishing those subjects, an object of the invention is to provide a system and process comprising a combination of an exposure apparatus capable of recording on a silver halide photosensitive material having high sensitivity while maintaining high image quality and an apparatus which receives and processes the image obtained with the exposure apparatus.

The object of the invention is accomplished with the following (1) to (12).
(1) A hologram production method for producing a hologram that reproduces a three-dimensional image from digital information on a three-dimensional image, the method comprising the following steps [4] to [6]:
   step [4] : converting digital image information about two or more two-dimensional parallactic images into a recorded image for holographic stereography;
   step [5]: holographically exposing with an exposure apparatus a specific silver halide photosensitive material for holography utilizing the recorded image converted in step [4] to print a three-dimensional image on the silver halide photosensitive material by holographic stereography; and
   step [6] : subjecting the silver halide photosensitive material printed in step [5] to a development processing,
      wherein the exposure apparatus in step [5] is of a type in which sets of partial data respectively synthesized through conversion from the two or more two-dimensional parallactic images so as to form partial element holograms are successively displayed on an SLM, and the images displayed on the SLM are successively recorded through an exposure head utilizing at least one laser as a light source, while shifting a position of the exposure head together with a reference beam, by moving the exposure head to continuously scan in a recording direction X and intermittently conveying the silver halide photosensitive material in a direction Y to thereby expose the silver halide photosensitive material to form the partial element holograms on the silver halide photosensitive material;
      the exposure light source intermittently illuminates at a frequency of 100 Hz or higher for a light emission period of 1 µs or shorter so as to interlock with the image displayed on the SLM; and
      the silver halide photosensitive material for holography utilized in steps [5] and [6] is a silver halide photosensitive material for holography which comprises: a substrate; and at least one photosensitive silver halide emulsion layer formed over the substrate and containing silver halide grains having a number-average diameter in terms of a diameter of equivalent circles of 10 to 50 nm, and which has an optimal exposure amount in exposure with the laser light source of 500 µJ/cm² or smaller, and the silver halide photosensitive material for holography after the development processing has a haze of 20 or lower and a diffraction efficiency of 50% or higher, and the silver halide photosensitive material for holography is treated in a development processing step.
(2) The hologram production method as described in (1) above,
   wherein the two or more two-dimensional parallactic images in step [4] are obtained through the following steps [1] to [3]:
   step [1]: extracting two or more two-dimensional parallactic images from three-dimensional information with an image processor;
   step [2] : transmitting the two or more two-dimensional parallactic images obtained in step [1],
   step [3]: storing the two or more two-dimensional parallactic images transmitted in step [2] in a server.
(3) The hologram production method as described in (1) or (2) above, which further comprises a step in which image information about color separation into three colors of R, G and B is obtained from the three-dimensional information so as to enable the hologram to be reproduced in full colors and regulation is conducted so that the reproduced colors on the hologram can have a color balance according to laser light source wavelengths and regeneration wavelengths for the holographic material,
   wherein the hologram is a hologram obtained by color reproduction through exposure for images of the respective colors with three laser light sources for R, G and B, and
   the silver halide photosensitive material has been spectrally sensitized so as to have sensitivity to three laser lights of R, G and B.
(4) The hologram production method as described in (2) above,
   wherein the image processor for extracting two or more two-dimensional parallactic images from three-dimensional information in step [1] is an image processor which includes two or more digital cameras disposed in a parallax direction and which performs stereophotographing with the cameras and interpolates the parallactic images obtained by the stereophotographing.
(5) The hologram production method as described in any of (1) to (4) above,
   wherein the parallax directions for the two-dimensional parallactic images are vertical and horizontal directions (full-parallax).
(6) The hologram production method as described in (2) above,
   wherein data are transmitted from two or more places located apart where steps [1] and [2] are conducted, and hologram production is centered on the exposure apparatus installed in one place.
(7) A hologram production system for producing a hologram that reproduces a three-dimensional image from digital information on a three-dimensional image, the system comprising apparatuses executing the following steps [4] to [6], respectively:
   step [4]: an apparatus which converts digital image information about two or more two-dimensional parallactic images into a recorded image for holographic stereography;
   step [5]: an exposure apparatus which holographically exposes a specific silver halide photosensitive material for holography utilizing the recorded image converted in step [4] to print a three-dimensional image on the silver halide photosensitive material by holographic stereography; and
   step [6] : an apparatus which subjects the silver halide photosensitive material printed in step [5] to a development processing,
      wherein the exposure apparatus in step [5] is of a type in which sets of partial data respectively synthesized through conversion from the two or more two-dimensional parallactic images so as to form partial element holograms are successively displayed on an SLM, and the images displayed on the SLM are successively recorded through an exposure head utilizing at least one laser as a light source, while shifting a position of the exposure head together with a reference beam, by moving the exposure head to continuously scan in a recording direction X and intermittently conveying the silver halide photosensitive material in a direction Y to thereby expose the silver halide photosensitive material to form the partial element holograms on the silver halide photosensitive material;
      the exposure light source intermittently illuminates at a frequency of 100 Hz or higher for a light emission period of 1 us or shorter so as to interlock with the image displayed on the SLM; and
      the silver halide photosensitive material for holography utilized in steps [5] and [6] is a silver halide photosensitive material for holography which comprises: a substrate; and at least one photosensitive silver halide emulsion layer formed over the substrate and containing silver halide grains having a number-average diameter in terms of a diameter of equivalent circles of 10 to 50 nm, and which has an optimal exposure amount in exposure with the laser light source of 500 µJ/cm² or smaller, and the silver halide photosensitive material for holography after the development processing has a haze of 20 or lower and a diffraction efficiency of 50% or higher, and the silver halide photosensitive material for holography is treated in a development processing step.
(8) The hologram production system as described in (7) above, which further comprises apparatuses executing the following steps [1] to [3] respectively so as to obtain the two or more two-dimensional parallactic images in step [4]:
   step [1]: an image processor which extracts two or more two-dimensional parallactic images from three-dimensional information;
   step [2] : an apparatus which transmits the two or more two-dimensional parallactic images obtained in step [1],
   step [3]: an apparatus which stores the two or more two-dimensional parallactic images transmitted in step [2] in a server.
(9) The hologram production system as described in (7) or (8) above, which includes a step in which image information about color separation into three colors of R, G and B is obtained from the three-dimensional information so as to enable the hologram to be reproduced in full colors and regulation is conducted so that the reproduced colors on the hologram can have a color balance according to laser light source wavelengths and regeneration wavelengths for the holographic material,
   wherein the hologram is a hologram obtained by color reproduction through exposure for images of the respective colors with three laser light sources for R, G and B, and
   the silver halide photosensitive material has been spectrally sensitized so as to have sensitivity to three laser lights of R, G and B.
(10) The hologram production system as described in (8) above,
   wherein the image processor for extracting two or more two-dimensional parallactic images from three-dimensional information in step [1] is an image processor which includes two or more digital cameras disposed in a parallax direction and which performs stereophotographing with the cameras and interpolates the parallactic images obtained by the stereophotographing.
(11) The hologram production system as described in any of (7) to (10) above,
   wherein the parallax directions for the two-dimensional parallactic images are vertical and horizontal directions (full-parallax).
(12) The hologram production system as described in (8) above,
   wherein data are transmitted from two or more places located apart where steps [1] and [2] are conducted, and hologram production is centered on the exposure apparatus installed in one place.

### Brief Description of the Drawings

Fig. 1 is a diagram showing the constitution of an exemplary embodiment of the system of the invention;
Fig. 2 is a slant view illustrating the constitution of a hologram exposure apparatus in an exemplary embodiment of the invention;
Fig. 3 is a partly cutaway front view of the hologram exposure apparatus shown in Fig. 2; and
Fig. 4 is a sectional view of a processor for hologram production in an exemplary embodiment of the invention,
   wherein 1 denotes automatic processor; 2 denotes developing tank; 3 denotes bleaching tank; 4 denotes water-washing tank; 7 denotes guide; 8 denotes squeeze part; 9 denotes drying part; 10 denotes circulating pump; 11 denotes circulating pump; 12 denotes circulating pump; 1A denotes recording medium; 2a, 2b, 3a, 3b, 4a, 4b each denotes conveying roller; 5A denotes guide part; 6A denotes ultraviolet lamp; 7A denotes pinch roller; 8A denotes heating roller; 9A denotes pinch roller; 10A denotes head; 11a, 11b each denotes guide shaft; 12A denotes movable part; 13 denotes VCM; 14 denotes VCM yoke; 15 denotes VCM yoke; 16 denotes VCM magnet; 17 denotes voice coil; 21R, 21G, 21B each denotes illuminant; 22R, 22G, 22B each denotes collimator lens; 23R, 23G each denotes dichroic prism; 23B denotes reflecting prism; 24 denotes special light modulator; 25 denotes reflecting prism; 51 dentoes conveying roller; 52 denotes conveying roller; 53 denotes conveying roller; 61 denotes crossover roller; 62 denotes crossover roller; 64 denotes crossover roller; 81 denotes squeeze roller; 91 denotes casing; 92 denotes conveying roller; 93 denotes guide; 94 denotes hot-air feeder; 95 denotes air blower; 96 denotes heater; 97 denotes duct; 180 denotes stock tank; 185 denotes piping; 186 denotes valve; 187 denotes service-water tap; and S denotes photosensitive material.

### Detailed Description of the Invention

Embodiments of the invention will be explained below in detail by reference to the drawings.

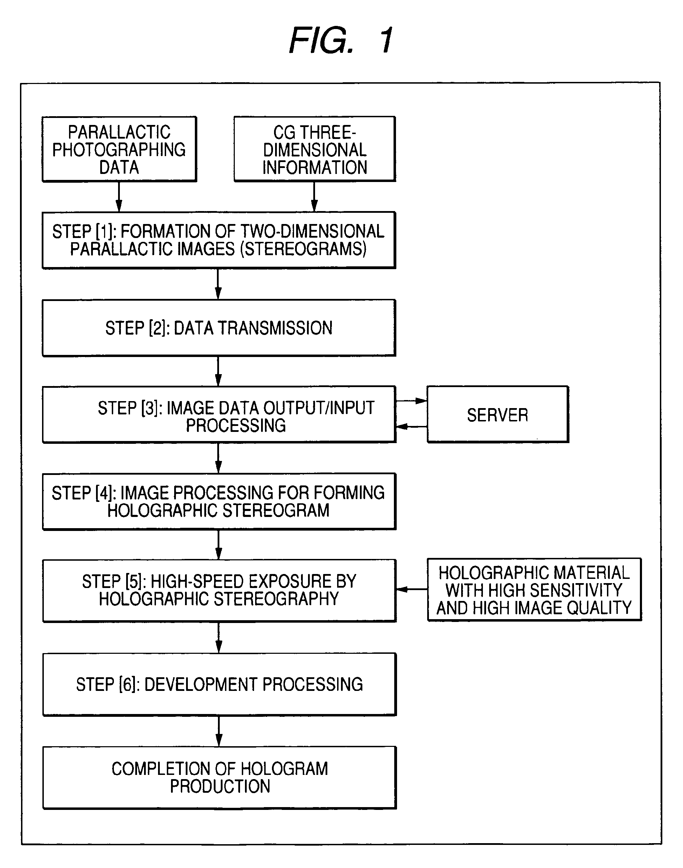

The constitution of the system of the invention is shown in Fig. 1.

The exposure apparatus in the invention is explained below.

The hologram production apparatus for use in the invention is a hologram production apparatus in which an interference pattern for emitting a reproduction light corresponding to a desired three-dimensional image upon irradiation with a reference beam for reproduction is recorded on a recording medium for holographic information recording to thereby produce a hologram for reproducing a three-dimensional image therefrom. This apparatus is equipped with: a head which irradiates part of the recording medium with recording light beams for forming part of the interference pattern to thereby serve to record part of the interference pattern; and a position-changing device for changing the relative positional relationship between the head and the recording medium.

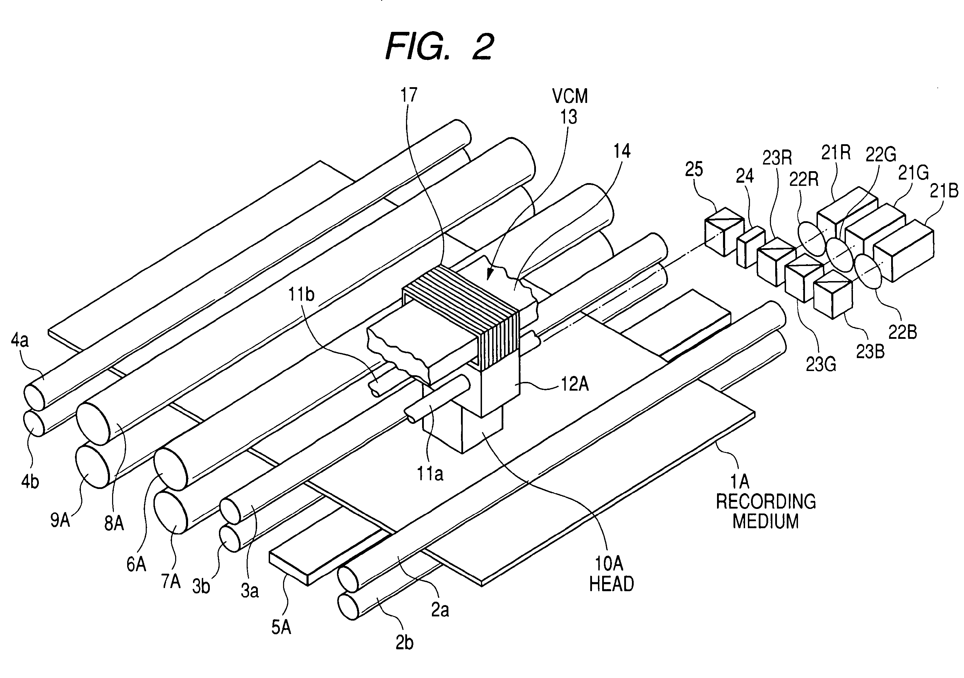

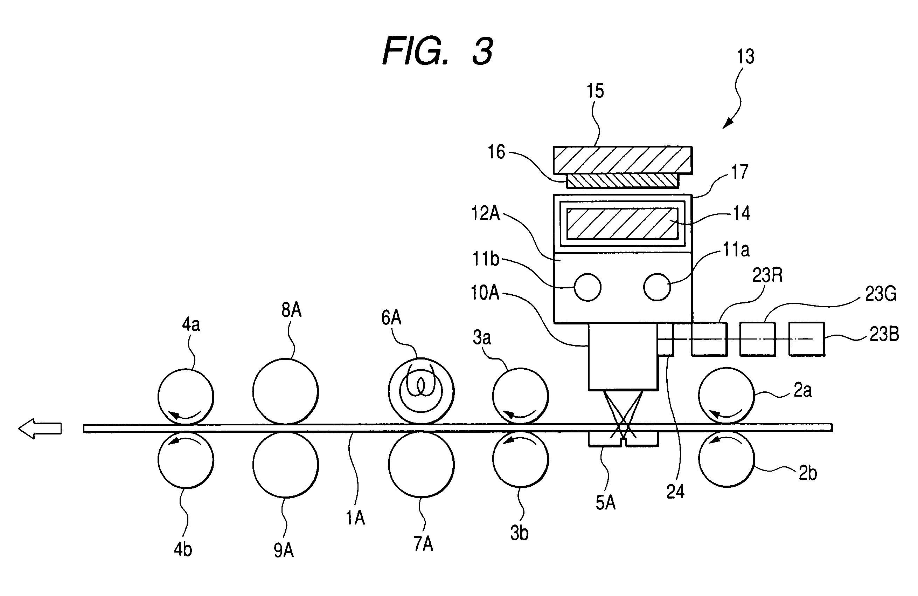

Fig. 2 is a slant view illustrating the constitution of a hologram exposure apparatus in a first embodiment of the invention. Fig. 3 is a partially cutaway front view of the hologram exposure apparatus shown in Fig. 2.

As shown in the figures, the hologram exposure apparatus in this embodiment includes: three pairs of cylindrical conveying rollers 2a and 2b, 3a and 3b, and 4a and 4b for conveying a sheet-form recording medium 1A, on which information is recorded by holography, from a feed part not shown to a discharge part not shown; a platy guide part 5A disposed in a position between the conveying rollers 2a and 2b and the conveying rollers 3a and 3b under the recording medium 1A so as to be parallel to the axial direction for the conveying rollers 2a and 2b and conveying rollers.3a and 3b; and a head 10A disposed so as to face the guide part 5A through the recording medium 1A and serving to irradiate part of the recording medium 1A with two recording light beams forming part of an interference pattern to be recorded on the recording medium 1A and to thereby record part of the interference pattern.

The hologram exposure apparatus further has: two guide shafts 11a and 11b disposed over the head 10A so as to be parallel to the axial direction for the conveying rollers 2a and 2b and conveying rollers 3a and 3b; and a movable part 12A which is movable along the guide shafts 11a and 11b while being guided by the guide shafts 11a and 11b. The head 10A has been bonded to the lower edge face of the movable part 12A so as to move together with the movable part 12A. Due to this constitution, partial element holograms are successively formed by exposure while continuously moving the head.

The hologram exposure apparatus furthermore has a voice coil motor (hereinafter referred to as VCM) 13 for moving the movable part 12A along the guide shafts 11a and 11b. This VCM 13 comprises: a VCM yoke 14 disposed over the guide shafts 11a and 11b so as to be parallel to the guide shafts 11a and 11b; a VCM yoke 15 which has been disposed over the VCM yoke 14 so as to be parallel to the VCM yoke 14 and be apart therefrom at a given distance and is connected to the VCM yoke 14 at an end; a platy VCM magnet 16 fixed to the lower side of the VCM yoke 15; and a voice coil 17 disposed around the VCM yoke 14 so as to be apart from the peripheral surface of the VCM yoke 14 at a given distance. The voice coil 17 is bonded to the upper edge face of the movable part 12A. In Fig. 2, the VCM yoke 15 and the VCM magnet 16 are omitted. By the VCM 13, which has the constitution described above, the head 10A can be moved parallel to the guide shafts 11a and 11b. The VCM 13 constitutes the position-changing device in the invention, which serves to change the relative positional relationship between the head 10A and the recording medium 1.

The hologram exposure apparatus still further has: a red (hereinafter referred to as R) illuminant 21R emitting an R coherent laser light; a green (hereinafter referred to as G) illuminant 21G emitting a G coherent laser light; a blue (hereinafter referred to as B) illuminant 21B emitting a B coherent laser light; collimator lenses 22R, 22G, and 22B which convert the laser lights emitted respectively from the illuminants 21R, 21G, and 21B to parallel light beams; a dichroic prism 23R into which the light which has passed through the collimator lens 22R strikes; a dichroic prism 23G into which the light which has passed through the collimator lens 22G strikes; and a reflecting prism 23B inton which the light which has passed through the collimator lens 22B strikes.

These illuminants are ones which emit a pulsed laser light or have been made to intermittently emit a light with a shutter or the like. Because the lights are emitted intermittently in a pulsed state, the recording medium is exposed intermittently even when the head moves continuously. In addition, the continuous head movement does not result in blurring of the image thus recorded, because the light emission period in the illuminants is as short as 1 µs or below. The light emission period is preferably 100 ns or shorter. Furthermore, since light emission cycles govern the speed of recording, the frequency of each light is 100 Hz or higher, preferably 1 kHz or higher.

In this system, when pulsed lasers having a light emission period of 0.1 µs are used as the lasers of the exposure apparatus and the light emission frequency thereof is regulated to 1 kHz, then the time period required for an image of 30 cm × 40 cm to be recorded at an element hologram writing pitch of 0.5 mm is about 10 minutes.

The reflecting prism 23B reflects the B light which has passed through the collimator lens 22B. The B light reflected by the reflecting prism 23B strikes into the dichroic prism 23G from a side thereof. The dichroic prism 23G serves to reflect the G light which has passed through the collimator lens 22G and to transmit the B light striking thereinto from the reflecting prism 23B side. Both the G light which has been reflected by the dichroic prism 23G and the B light which has passed through the dichroic prism 23G strike into the dichroic prism 23R from a side thereof. The dichroic prism 23R serves to reflect the R light which has passed through the collimator lens 22R and to transmit the B light and G light striking thereinto from the dichroic prism 23G side. All of the R light which has been reflected by the dichroic prism 23R and the B light and G light which have passed through the dichroic prism 23R are emitted from the dichroic prism 23R in the same direction. The hologram exposure apparatus further has: a spatial light modulator 24 for spatially modulating the R, G, and B lights emitted from the dichroic prism 23R; and a reflecting prism 25 which reflects the lights which have passed through the spatial light modulator 24 and causes them to strike on the head 10A.

The spatial light modulator 24 has many pixels disposed in lattice arrangement, and the direction of polarization of the light to be emitted is selected for each pixel. The modulator 24 can thus serve to spatially modulate light based on a difference in the direction of polarization. Specifically, the spatial light modulator 24, for example, has the same constitution as a liquid-crystal display element which utilizes optical activity of a liquid crystal and in which the polarizer has been removed. In this embodiment, the spatial light modulator 24 functions for each pixel in the following manner: the modulator 24 rotates the direction of polarization by +90° when it is off, and does not rotate the direction of polarization when it is on. As the liquid crystal in the spatial light modulator 24 can be used, for example, a ferroelectric liquid crystal having a high response speed (on the order of microsecond). Use of this liquid crystal enables high-speed recording.

The response of this SLM is synchronized with the intermittent light emission from each illuminant and with the speed of head movement, whereby partial element holograms can be successively formed by exposing the recording material while changing the position of the recording material.

In the constitution shown in the figure, a transmission type LCD is used as the SLM. However, it is also preferred to use a reflection type LCOS as the SLM. To use an optical fiber cable for light transmission from the reflecting prism 25 to the exposure head 10A is also preferred. Furthermore, this optical fiber cable preferably is a polarization-retaining fiber.

For forming an image to be displayed on the SLM in this exposure apparatus, use can be made of methods described in, e.g., M. Holzbach, "Three-Dimensional Image Processing for Synthetic Holographic Stereograms", S.M. Thesis, Program in Media Arts and Science, MIT, September 1986, etc.

For obtaining three-dimensional information on an actual object such as, e.g., a man as two-dimensional parallactic images, use can be made of a method in which two or more digital cameras are arranged in parallactic positions to photograph the object. A general three-dimensional photographing system is usable.

Visualization data for use in complicated space analysis, 3-D CAD's, and three-dimensional data on a virtual space in computer graphics or the like are frequently employed as original three-dimensional data, not to mention data on actual objects. For obtaining two or more two-dimensional parallactic images as starting data for this stereographic process from such three-dimensional information, use can be made of the same method as that for obtaining parallactic images with that VR software for displaying so-called 2.5-dimensional images which is commonly used in three-dimensional image displaying.

The parallactic images can be parallactic images viewed from left-hand and right-hand directions only. It is, however, desirable that the parallactic images for three-dimensional displaying should be ones of full-parallax including parallactic images viewed from upper and lower directions besides ones viewed from left-hand and right-hand directions.

The silver halide holographic photosensitive material in the invention is explained below.

The term "silver halide holographic photosensitive material" as used in the invention means a silver halide photosensitive material in which interference waves resulting from the interference of object light with reference light can be recorded. By this wavefront recording, both the amplitude of the object light and the phase thereof can be recorded. Consequently, the object can be three-dimensionally reproduced faithfully with reference light.

The silver halide holographic photosensitive material in the invention comprises a substrate and at least one silver halide emulsion layer formed thereover.

The substrate to be used can be one which is in ordinary use in silver halide photosensitive materials. Typical examples thereof include glasses, TAC, PET, and PEN. It is preferred to use a glass or TAC which does not have optical anisotropy. The thickness of the substrate can be suitably selected according to the intended use thereof and the manner of use. Any of those substrates is coated with the emulsion layer. Besides the emulsion layer, other layers can be further formed, such as a protective layer, YF layer, interlayer, antihalation layer, undercoat layer, and back layer. Such optional layers can be suitably selected according to purposes. When a flexible substrate such as, e.g., TAC is employed, formation of a back layer is exceedingly effective in enabling the photosensitive material to retain satisfactory non-curling properties. In the case where the photosensitive material has no protective layer, adhesion between samples can be diminished by incorporating a matting agent or the like into the back layer. Furthermore, various troubles attributable to static buildup, such as, e.g., dust particle adhesion can be positively eliminated by regulating electrification characteristics.

The amount of silver applied and the amount of gelatin applied in the silver halide emulsion layer and in other layers are not particularly limited. The amount of silver applied is preferably in the range of from 1 g/m² to 10 g/m². The amount of gelatin applied is preferably in the range of from 1 g/m² to 10 g/m². The proportion of the silver applied to the gelatin applied also can be selected in any desired range. Preferably, the proportion thereof is in the range of from 0.3 to 2.0. The thickness of the emulsion layer is preferably in the range of generally from 3 µm to 12 µm. In case where the emulsion layer is too thin, interference waves cannot be sufficiently recorded. In case where the emulsion layer is too thick, the photosensitive material disadvantageously has reduced resolution due to light scattering, etc. The thickness to which the film swells in a processing step can be selected at will by regulating the amount of a hardener to be used. Preferably, the film is hardened to such a degree that the film undergoes no change in film thickness through processing, i.e., the film does not release the silver halide, gelatin, etc. in processing. With respect to a green-light-sensitive silver halide emulsion layer and a red-light-sensitive silver halide emulsion layer also, the relationship between the amount of silver applied and the amount of gelatin applied is basically not limited. Preferably, however, the proportion of the amount of silver applied to the amount of gelatin applied is in the range of from 1 to 2. The degree of film hardening also is basically the same. However, in the case of separately hardening the layers, it is preferred that a layer should have a lower degree of hardening than the overlying layer.

The silver halide grains contained in the silver halide emulsion layer in the invention preferably are normal crystals. The silver grains can have any of the shapes of octahedron, cube, and tetradecahedron and shapes obtained by rounding these shapes. Preferably, the silver halide grains have the shape of a rounded cube or the shape of a cube with clear vertices. It is preferred that the silver halide grains contain no twinned crystals. In particular, the proportion of twinned-crystal grains contained in the silver halide grains is preferably 3% or lower, move preferably 1% or lower, by number. The term "twinned crystals" herein includes single twin, double twin, multiple twin, parallel twin, and nonparallel twin.

The silver halide grains in the invention preferably are monodisperse ones. The coefficient of variation of the diameters of all the silver halide grains in terms of the diameters of equivalent circles determined from projected areas is preferably 25% or lower, more preferably 20% or lower, especially preferably 15% or lower. The term "coefficient of variation of the diameters of equivalent circles" means a value obtained by dividing the standard deviation of the distribution of the diameters of circles respectively equivalent to the individual silver halide grains by the average diameter of the equivalent circles.

The diameters of equivalent circles can be determined, for example, by directly taking a photograph of the grains with a transmission electron microscope and determining the diameters of circles (equivalent circles) having the same areas as the projected areas of the individual grains. In the invention, since the silver halide grains are ultrafine grains, clear grain images can be obtained by photographing with a high-voltage electron microscope at a low temperature.

The silver halide grains in the invention preferably are silver bromide, silver iodobromide, silver chloroiodobromide, and silver chlorobromide. The content of silver iodide is especially preferably from 1% by mole to 5% by mole. The content of silver chloride is especially preferably 5% by mole or lower. It is preferred that each grain should have no distribution of the content of silver chloride and silver iodide. The coefficient of variation of the inter-grain distribution of the content of silver chloride and silver iodide is preferably 20% or lower, especially preferably 10% or lower. For determining the contents of silver chloride and silver iodide in individual grains, the EPMA method (electron probe micro analyzer method) is generally effective. A sample containing emulsion grains dispersed therein so as not to come into contact with each other is prepared, and this sample is irradiated with an electron beam. The X-ray which is emitted as a result of the irradiation is analyzed, whereby the elemental analysis of the ultramicroarea irradiated with an electron beam can be conducted. It is preferred that this examination be conducted while cooling the sample at a low temperature in order to prevent the sample from being damaged by the electron beam.

Since the silver halide grains in the invention are ultrafine grains, it is not easy to impart a halogen composition structure. However, a structure having a high silver iodide content in inner parts, a structure having a high silver iodide content in outer parts, or the like is possible. Structures including silver chloride also are the same. Furthermore, a multilayer structure composed of three or more layers is also possible.

The silver halide grains in the invention have a number-average diameter in terms of the diameter of equivalent circles of from 10 nm to 50 nm. The number-average equivalent-circle diameter thereof is more preferably from 10 nm to 40 nm, especially preferably from 20 nm to 30 nm. In general, too large grain sizes result in poor quality of wavefront reproduction images, while too small grain sizes make it impossible to completely inhibit the grains f rombecoming unstable, e.g., from undergoing grain size fluctuations.

In the invention, this grain size regulation has made it possible to conduct reduction sensitization besides gold-chalcogen sensitization when the silver halide grains are chemically sensitized. In case where the grain size is too large, fogging is enhanced and sensitivity is not increased. In addition, storage stability deteriorates considerably.

The silver halide grains to be used in the invention can be prepared by known methods. A preferred method is to add an aqueous silver nitrate solution and an aqueous halogen solution to an aqueous gelatin solution by the double-jet method. In this preparation, it is preferred to add the silver nitrate solution and halogen solution while increasing the flow rates thereof. It is also preferred to regulate the pH and pAg of the system during the addition. The pH is preferably in the range of 5 to 8. The pAg is preferably in the range of 5 to 9. Lower temperatures are preferred for preparing ultrafine grains and, especially preferably, a temperature in the range of 20 to 40°C is used. The various additives which will be described later can be added for the purposes of grain size regulation, grain size distribution regulation, sensitivity/fogging regulation, gradation/development progress regulation, etc.

The silver halide emulsion to be used in the invention has undergone chemical sensitization. In particular, the chemical sensitization includes gold-chalcogen sensitization and reduction sensitization. The term "chemical sensitization" means the step corresponding to the chemical sensitization stage when a process for silver halide emulsion production is divided into three stages, i.e., a grain formation stage, water washing stage, and chemical sensitization stage. Chemical sensitization is a step in which any of various chemical sensitizers is added and the emulsion is ripened at an elevated temperature.

It has conventionally been regarded as difficult to conduct a combination of gold-chalcogen sensitization and reduction sensitization in chemical sensitization. However, it has been found that the combination is possible in a grain size region within the range specified in the invention. Extremely high sensitivity can be attained by the combination and the silver halide emulsion thus sensitized can have storability on a practically fully satisfactory level. Chalcogen sensitization and noble-metal sensitization are described in detail in T. H. James, The Theory of the Photographic Process, 4th ed., Macmillan, 1977, pp.67-76. A chalcogen sensitizer comprising sulfur, selenium, or tellurium and a gold sensitizer may be used together with platinum, palladium, iridium, or a combination of two or more of these sensitizers at a pAg of 5-10, pH of 5-8, and temperature of 30-80°C, as described in Research Disclosure, Vol.120, April 1974, 12008; Research Disclosure, Vol.34, June 1975, 13452; U.S. Patents Nos. 2,642,361, 3,297,446, 3,772,031, 3,857,711, 3,901,714, 4,266,018, and 3,904,415; and British Patent No. 1,315,755. In the case of gold sensitization, use can be made of a known compound such as chloroauric acid, potassium chloroaurate, potassium aurithiocyanate, gold sulfide, or gold selenide. A palladium compound means a salt of divalent palladium or a salt of tetravalent palladium. Apreferredpalladiumcompound is represented by R₂ PdX₆ or R₂PdX₄, whereinRrepresents a hydrogen atom, alkali metal atom, or ammonium group, and X represents a halogen atom selected from chlorine, bromine, and iodine atoms.

Specific examples of the preferred palladium compound include K₂PdCl₄, (NH₄)₂PdCl₆, Na₂PdCl₄, (NH₄)₂PdCl₄, Li₂PdCl₄, Na₂PdCl₆, and K₂PdBr₄. It is preferred that a gold compound and a palladium compound be used in combination with a thiocyanic acid salt or a selenocyanic acid salt.

Usable sulfur sensitizers include hypo, thiourea compounds, rhodanine compounds, and the sulfur-containing compounds shown in U.S. Patents Nos. 3,857,711, 4,266,018, and 4,054,457. It is also possible to conduct chemical sensitization in the presence of a so-called chemical-sensitization aid. As a useful chemical-sensitization aid is used a compound known to inhibit fogging and enhance sensitivity during chemical sensitization, such as azaindene, azapyridazine, or azapyrimidine. Examples of such chemical-sensitization aid modifiers are given in U.S. Patents Nos. 2,131,038, 3,411,914, and 3,554,757, JP-A-58-126526, and Duffin, Photographic Emulsion Chemistry, pp.138-143.

The amount of the gold sensitizer is preferably 1×10⁻⁶ to 1×10⁻² mol, more preferably 1×10⁻⁵ to 5×10⁻³ mol, per mol of the silver halide. A preferred range of the amount of the palladium compound is from 1×10⁻³ to 5×10⁻⁷ mol per mol of the silver halide. A preferred range of the amount of the thiocyanate compound or selenocyanate compound is from 1×10⁻⁴ to 1×10⁻² mol per mol of the silver halide.

The amount of the sulfur sensitizer to be used for the silver halide grains for use in the invention is preferably 1×10⁻⁶ to 1×10⁻² mol, more preferably 1×10⁻⁵ to 5×10⁻³ mol, per mol of the silver halide.

Among preferred methods for the chalcogen sensitization of the emulsion to be used in the invention is selenium sensitization. In the selenium sensitization, a known unstable selenium compound is used. Specifically, use can be made of colloidal selenium metal or a selenium compound such as a selenourea compound (e.g., N,N-dimethylselenourea or N,N-diethylselenourea), a selenoketone compound, or a selenoamide compound. It is preferred that the chalcogen sensitization (preferably selenium sensitization) be chalcogen sensitization comprising a combination with sulfur sensitization.

In tellurium sensitization, an unstable tellurium compound is used. Use can be made of the unstable tellurium compounds shown in, e.g., JP-A-4-224595, JP-A-4-271341, JP-A-4-333043, JP-A-5-303157, JP-A-6-27573, JP-A-6-175258, JP-A-6-180478, JP-A-6-208184, JP-A-6-208186, JP-A-6-317867, JP-A-7-140579, JP-A-7-301879, and JP-A-7-301880.

Specifically, use may be made of phosphine tellurides (e.g., n-butyldiisopropylphosphine telluride, triisobutylphosphine telluride, tri-n-butoxyphosphine telluride, and triisopropylphosphine telluride), diacyl (di) tellurides (e.g., bis(diphenylcarbamoyl) ditelluride, bis(N-phenyl-N-methylcarbamoyl) ditelluride, bis(N-phenyl-N-methylcarbamoyl) telluride, bis(N-phenyl-N-benzylcarbamoyl) telluride, and bis (ethoxycarbonyl) telluride), tellurourea compounds (e.g., N,N'-dimethylethylenetellurourea), telluroamide compounds, and telluroester compounds. Preferred are phosphine tellurides and diacyl (di)tellurides.

The silver halide emulsion to be used in the invention can be made to have higher sensitivity by conducting reduction sensitization besides gold-chalcogen sensitization in chemical sensitization.

The reduction sensitization may be any one of: a method in which a reducing sensitizer is added to the silver halide emulsion; the method called silver ripening, in which the emulsion is ripened in a low-pAg atmosphere having a pAg of 1-7; and the method called high-pH ripening, in which the emulsion is ripened in a high-pH atmosphere having a pH of 8-11. Two or more of these methods may be used in combination.

The method in which a reducing sensitizer is added is a preferredmethod because the level of reducing sensitization can be subtlely regulated.

Known examples of the reducing sensitizer include stannous salts, ascorbic acid and derivatives thereof, amines and polyamines, hydrazine derivatives, formamidinesulfinic acid, silane compounds, and borane compounds. A compound selected from these known reducing sensitizers can be used as the reducing sensitizer in the invention. Two or more compounds selected from these can also be used in combination. Preferred reducing sensitizer compounds are stannous chloride, thiourea dioxide, dimethylaminoborane, ascorbic acid, and derivatives of the acid. An amount of the reducing sensitizer to be added should be selected because it depends on emulsion production conditions. However, an appropriate range thereof is from 10⁻⁷ to 10⁻³ mol per mol of the silver halide.

The reducing sensitizer is added during chemical sensitization in the form of a solution in, e.g., water or an organic solvent such as an alcohol, glycol, ketone, ester, or amide. The timing of the addition may be either before or after the addition of a gold sensitizer or a chalcogen sensitizer. A preferred method comprises adding the reducing sensitizer, ripening the emulsion, subsequently adding a chalcogen sensitizer or gold sensitizer thereto, and then further ripening the emulsion to complete chemical sensitization. It is also preferred to add the reducing sensitizer solution in some portions or to continuously add the solution over a prolonged period.

It is preferred in the invention that the silver halide emulsion should contain a tetrazaindene compound in an amount of from 3×10⁻³ mol to 3×10⁻² mol per mol of the silver of the silver halide grains. The tetrazaindene compound to be used in the invention is one which is known as a stabilizer and antifoggant for photographic emulsions and shown in Research Disclosure, Vol.307, p.866. Preferred examples of the tetrazaindene compound to be used in the invention are tetrazaindene compounds having a hydroxy group as a substituent, in particular, hydroxytetrazaindene compounds. The heterocyclic ring of the tetrazaindene may have substituents other than hydroxy. Examples of the substituents which may be possessed include alkyl groups, amino, hydroxyamino, alkylamino groups, dialkylamino groups, arylamino groups, carboxy, alkoxycarbonyl groups, halogen atoms, acylamino groups, and cyano. It should, however, be noted that tetrazaindene compounds having a sulfur-containing substituent (e.g., mercapto group) are undesirable.

Specific examples of the tetrazaindene compound to be used in the invention are shown below, but the compound should not be construed as being limited to the following examples.
4-hydroxy-6-methyl-1,3,3a,7-tetrazaindene
4-hydroxy-6-t-butyl-1,3,3a,7-tetrazaindene
4-hydroxy-6-phenyl-1,3,3a,7-tetrazaindene
4-hydroxy-1,3,3a,7-tetrazaindene
4-methyl-6-hydroxy-1,3,3a,7-tetrazaindene
2-methylthio-4-hydroxy-6-methyl-1,3,3a,7-tetrazain dene
4-hydroxy-5-bromo-6-methyl-1,3,3a,7-tetrazaindene
4-hydroxy-6-methyl-1,2,3a,7-tetrazaindene
4-hydroxy-6-ethyl-1,2.3a,7-tetrazaindene
2,4-dihydroxy-6-phenyl-1,3,3a,7-triazaindene
4-hydroxy-6-phenyl-1,2,3,3a,7-pentazaindene

The amount of such a tetrazaindene compound to be added is preferably 3×10⁻³ mol to 3×10⁻² mol, more preferably 9×10⁻³ mol to 3×10⁻² mol, even more preferably 6×10⁻³ mol to 2×10⁻² mol, per mol of the silver halide. It is preferred that the tetrazaindene compound be added before the initiation of chemical sensitization, during chemical sensitization, after chemical sensitization, or just before application. In case where the amount of the compound added is too small, the addition of the tetrazaindene compound does not produce the effect of keeping the grain size stable in the lapse of time. The term "lapse of time" herein means either the lapse of time in the preparation of silver halide emulsion grains or the lapse of time from the preparation to application. By inhibiting a change with the lapse of time, stable production and quality can be attained. In case where the amount of the tetrazaindene compound added is too large, the change in grain size with the lapse of time becomes larger, rather than smaller, than in the case of not adding the compound.

It is preferred in the invention that the silver halide emulsion should contain a thiocyanic acid salt in an amount of from 1×10⁻⁴ to 1×10⁻² mol per mol of the silver of the silver halide grains. More preferably, a thiocyanic acid salt is contained in an amount of from 5×10⁻⁴ to 5×10⁻³ mol per mol of the silver of the silver halide grains. In case where the amount of the salt is too small, the effect of increasing sensitivity is low. In case where the amount thereof is too large, the adverse effect of the thiocyanic acid salt as a silver halide solvent, i.e., the effect of enhancing instability by causing grain size fluctuations, etc., becomes too high. Silver halide solvents other than thiocyanic acid salts can also be advantageously used in the invention. Examples of the silver halide solvents include (a) the organic thioethers shown in, e.g., U.S. Patents Nos. 3,271,157, 3,531,286, and 3,574,628, JP-A-54-1019, and JP-A-54-158917, (b) the thiourea derivatives shown in, e.g., JP-A-53-82408, JP-A-55-77737, and JP-A-55-2982, (c) the silver halide solvents having a thiocarbonyl group sandwiched between an oxygen or sulfur atom and a nitrogen atom as shown in JP-A-53-144319, (d) the imidazole compounds shown in JP-A-54-100717, (e) sulfurous acid salts, and (f) ammonia.

The timing of addition of the thiocyanic acid salt, use of which is preferred in the invention, may be in any stage in the preparation of silver halide emulsion grains. However, the timing is preferably after the step of forming silver halide grains, more preferably after completion of a desalting step and before a coating step. Especially preferably, the salt is added during the step of chemical sensitization. A preferred method of addition is to add the salt in the form of an aqueous solution. The thiocyanic acid salt preferably is KSCN, NaSCN, or NH₄SCN.

It is preferred in the invention that the silver halide emulsion should contain a J-aggregating cyanine dye as a sensitizing dye in an amount of from 1×10⁻⁴ mol to 1×10⁻² mol per mol of the silver of the silver halide grains. The incorporation of a J-aggregating cyanine dye in that amount is effective in significantly inhibiting the silver halide solvent described above from producing the effect of making the ultrafine silver halide grains unstable. The term "J-aggregating" herein means that the dye in the state of being adsorbed on silver halide grains has an absorption maximum at a wavelength shifted toward the longer-wavelength side by at least 10 nm, more preferably at least 20 nm, from that for the absorption maximum of the dye in solution. Especially preferably, the silver halide emulsion contains a J-aggregating cyanine dye in an amount of from 5×10⁻⁴ mol to 5×10⁻³ mol per mol of the silver of the silver halide grains.

Sensitizing dyes generally usable in the invention include cyanine dyes, merocyanine dyes, composite cyanine dyes, composite merocyanine dyes, holopolar cyanine dyes, hemicyanine dyes, styryl dyes, and hemioxonol dyes. Especially useful dyes are dyes belonging to the cyanine dyes. Any of the basic heterocyclic nuclei generally used in cyanine dyes can be applied to those dyes. Examples thereof include pyrroline, oxazoline, thiazoline, pyrrole, oxazole, thiazole, selenazole, imidazole, tetrazole, and pyridine nuclei; nuclei each comprising an alicyclic hydrocarbon ring fused to any of those nuclei; and nuclei each comprising an aromatic hydrocarbon ring fused to any of those nuclei, such as, e.g., indolenine, benzoindolenine, indole, benzoxazole, naphthoxazole, benzothiazole, naphthothiazole, benzoselenazole, benzoimidazole, and quinoline nuclei. These nuclei may have one or more substituents bonded to carbon atoms thereof.

Those sensitizing dyes may be used alone or in combination of two or more thereof. A combination of sensitizing dyes is frequently used especially for the purpose of supersensitization. Typical examples thereof are given in U.S. Patents Nos. 2, 688, 545, 2, 977, 229, 3, 397, 060, 3, 522, 052, 3,527,641, 3,617,293, 3,628,964, 3,666,480, 3,672,898, 3,679,428, 3,703,377, 3,769,301, 3,814,609, 3,837,862, and 4,026,707, British Patents Nos. 1,344,281 and 1,507,803, JP-B-43-4936, JP-B-53-12375, JP-A-52-110618, and JP-A-52-109925.

A dye which itself has no spectrally sensitizing effect or a substance which absorbs substantially no visible light and shows supersensitization may be added besides any of those sensitizing dyes, either simultaneously with or separately from the dye. In the invention, it is especially preferred to use a stilbene-based supersensitizing agent.

In the invention, the timing of addition of a sensitizing dye may be in any stage in the preparation of silver halide emulsion grains. However, the timing is preferably before the step of chemical sensitization, and is more preferably after completion of the step of forming silver halide grains and before a desalting step. For adding the sensitizing dye, a known method can be used. Preferably, the dye is added in the form of an aqueous solution or aqueous dispersion.

It is preferred in the invention that the silver halide emulsion should contain an iridium salt in an amount of from 1×10⁻⁹ mol to 1×10⁻² mol per mol of the silver of the silver halide grains. The incorporation of an iridium salt in that amount is effective in significantly inhibiting the silver halide solvent from producing the effect of making the ultrafine silver halide grains unstable. Especially preferably, the silver halide emulsion contains an iridium salt in an amount of from 2×10⁻⁴ mol to 1×10⁻³ mol per mol of the silver of the silver halide grains.

In the invention, the timing of addition of an iridium salt may be in any stage in the preparation of silver halide emulsion grains. Preferably, the salt is added during the step of forming silver halide grains. A preferred method of addition is to add the salt in the form of an aqueous solution.

As the iridium salt is preferably used a complex of trivalent or tetravalent iridium. Typical examples of the iridium salt include K₃IrCl₆, K₂IrCl₆, K₃IrCl₅(H₂O), and K₂IrCl₅(H₂O). Besides such potassium salts, sodium salts and ammonium salts are also preferred. Besides Cl and H₂O, known ligands are usable as ligands for the iridium. It is preferred to use that iridium complex including an organic ligand which is given in JP-A-7-072569. Morepreferably, the iridiumcomplex including a cyano group which is given in JP-A-2-761027 is used.

The silver halide grains in the invention preferably are ones which are doped with a hexacyanometal complex besides an iridium salt. Preferred among hexacyanometal complexes are ones including iron, ruthenium, osmium, cobalt, rhodium, iridium, or chromium. The amount of such a metal complex to be added is preferably in the range of from 10⁻⁶ to 10⁻² mol, more preferably in the range of from 10⁻⁵ to 10⁻³ mol, per mol of the silver halide. The metal complex can be added in the form of a solution in water or an organic solvent. The organic solvent preferably has miscibility with water. Examples of the organic solvent include alcohols, ethers, glycols, ketones, esters, and amides.

An especially preferred metal complex is a hexacyanometal complex represented by the following formula (I) :

(I) [M(CN)₆]ⁿ⁻

(wherein M is iron, ruthenium, osmium, cobalt, rhodium, iridium, or chromium, and n is 3 or 4).

Specific examples of the hexacyanometal complex are shown below.

(I-1) [Fe(CN)₆]⁴⁻

(I-2) [Fe(CN)₆]³⁻

(I-3) [Ru(CN)₆]⁴⁻

(I-4) [Os(CN)₆]⁴⁻

(I-5) [Co(CN)₆]³⁻

(I-6) [Rh(CN)₆]³⁻

(I-7) [Ir(CN)₆]³⁻

(I-8) [Cr(CN)₆]⁴⁻

The counter cations of such hexacyano complexes preferably are ones which are miscible with water and are suitable for the procedure of precipitating the silver halide emulsion. Examples of the counter cations include alkali metal ions (e.g., sodium ion, potassium ion, rubidium ion, cesium ion, and lithium ion), ammonium ion, and alkylammonium ions.

The silver halide photosensitive material for holography in the invention preferably contains a low-molecular gelatin. More preferably, the silver halide emulsion contains a low-molecular gelatin. The term "low-molecular gelatin" in the invention means a gelatin having a number-average molecular weight of 3,000 to 50,000, more preferably 10,000 to 30,000. The gelatin to be used in the invention may have undergone any of the following various modification treatments. Examples of modified gelatins include gelatins obtained by modifying amino groups, such as phthalated gelatin, succinated gelatin, trimellitated gelatin, and pyromellitated gelatin; gelatins obtained by modifying carboxyl groups, such as esterified gelatins and amidated gelatins; formylated gelatins obtained by modifying imidazole groups; oxidized gelatins obtained by reducing the amount of methionine groups; and reduced gelatins obtained by increasing the amount of methionine groups.

On the other hand, other hydrophilic colloids also can be used. Examples of usable hydrophilic colloids include proteins such as gelatin derivatives, graft polymers comprising a gelatin and another polymer, albumin, and casein; cellulose derivatives such as hydroxyethyl cellulose, carboxymethyl cellulose, and cellulose sulfuric acid esters; sugar derivatives such as sodium alginate and starch derivatives; and various synthetic hydrophilic high-molecular substances including homopolymers or copolymers, such as poly(vinyl alcohol), partly acetalized poly(vinyl alcohol), poly(N-vinylpyrrolidone), poly(acrylic acid), poly(methacrylic acid), polyacrylamide, polyvinyl imidazole, and polyvinylpyrazole. As the gelatin derivatives, use may be made of lime-treated gelatins, acid-treated gelatins, and the enzyme-treated gelatins described in Bull. Soc. Sci. Photo. Japan, No. 16, p.30 (1966). Furthermore, gelatin hydrolyzates and enzymatically decomposed gelatins can be used.

The silver halide emulsion to be used in the invention is usually washed with water. Although the temperature of the water for washing can be selected according to the purposes, it is preferably selected in the range of 5 to 50°C. The pH during the water washing also can be selected according to purposes. However, it is selected preferably in the range of 2 to 10, more preferably in the range of 3 to 8. The pAg during the water washing also can be selected according to purposes, but is preferably selected in the range of 5 to 10. A method for the water washing can be selected from the noodle washing method, dialysis with a semipermeable membrane, centrifugal separation, coagulation/sedimentation method, and ion-exchange method. In the case of employing the coagulation/sedimentationmethod, use can be made of a technique selected from one using a sulfuric acid salt, one using an organic solvent, one using a water-soluble polymer, one using a gelatin derivative, and the like.

Various compounds can be incorporated into the silver halide emulsion for use in the invention for the purpose of preventing fogging of the photosensitive material during production, storage, or processing or stabilizing the photographic performance thereof. Namely, many compounds known as antifoggants or stabilizers can be added. Examples thereof include thiazoles such as benzothiazolium salts, nitroimidazoles, nitrobenzimidazoles, chlorobenzimidazoles, bromobenzimidazoles, mercaptothiazoles, mercaptobenzothiazoles, mercaptobenzimidazoles, mercaptothiadiazoles, aminotriazoles, benzotriazoles, nitrobenzotriazoles, and mercaptotetrazoles (in particular, 1-phenyl-5-mercaptotetrazole) ; mercaptopyrimidines ; mercaptotriazines; thioketo compounds such as oxazolinethione; and azaindenes such as triazaindenes and pentaazaindenes. For example, such compounds shown in U. S. Patents Nos. 3, 954, 474 and 3,982,947 and JP-B-52-28660 can be used. One preferred compound is shown in JP-A-63-212932. Such antifoggants and stabilizers can be added at various timings, such as before, during, or after grain formation, during a water washing step, during dispersion after water washing, before, during, or after chemical sensitization, and before application, according to purposes. Besides being added during emulsion preparation so as to produce the original effects of antifogging and stabilization, the antifoggants or stabilizers can be used for various purposes. For example, they can be used in order to control the crystal habit of grains, reduce the size of grains, reduce the solubility of grains, regulate chemical sensitization, and regulate dye arrangement.

It is preferred, for some purposes, that a salt of a metal ion be present during the preparation of the emulsion for use in the invention, such as, e.g., during grain formation, in a desalting step, or during chemical sensitization, or before application. In the case where grains are doped with the salt, it is preferred to add the salt during grain formation. In the case where the salt is used for modifying the surface of grains or as a chemical sensitizer, it is preferred to add the salt after grain formation and before completion of chemical sensitization. A method for the doping can be selected as to whether individual grains are entirely doped or the grain cores only or grain shells only are doped. For example, use can be made of Mg, Ca, Sr, Ba, Al, Sc, Y, La, Cr, Mn, Fe, Co, Ni, Cu, Zn, Ga, Ru, Rh, Pd, Re, Os, Ir, Pt, Au, Cd, Hg, Tl, In, Sn, Pb, and Bi. These metals can be added in any salt form capable of being dissolved during grain formation, such as an ammonium salt, acetate, nitrate, sulfate, phosphate, hydroxide,six-coordinate complex,orfour-coordinate complex. Examples thereof include CdBr₂, CdCl₂, Cd(NO₃)₂, Pb(NO₃)₂, Pb(CH₃COO)₂, K₃[Fe(CN)₆], (NH₄)₄[Fe(CN)₆], K₃IrCl₆, (NH₄)₃RhCl₆, and K₄Ru(CN)₆. The ligands of such coordination compounds can be selected from halo, aquo, cyano, cyanato, thiocyanato, nitrosyl, thionitrosyl, oxo, and carbonyl. These metal compounds may be used alone or in combination of two or more thereof.

The metal compound is added preferably in the form of a solution in water or an appropriate organic solvent such as methanol or acetone. A method for stabilizing the solution may be used which comprises adding an aqueous solution of a hydrogen halide (e.g., HCl or HBr) or an alkali halide (e.g., KCl, NaCl, KBr, or NaBr) . According to need, an acid, alkali, or the like may be added. The metal compound may be added to the reaction vessel either before grain formation or during grain formation. It is also possible to add the metal compound to an aqueous solution of a water-soluble silver salt (e.g., AgNO₃) or alkali halide (e.g., NaCl, KBr, or KI) and to continuously add the resultant solution during the formation of silver halide grains. Furthermore, use may be made of a method in which a solution of the metal compound is prepared independently of a solution of the water-soluble silver salt or alkali halide and the metal salt solution is continuously added in an appropriate stage during grain formation. A combination of various addition techniques is also preferred.

It is preferred to use a silver-oxidizing agent in the emulsion to be used in the invention. The term "silver-oxidizing agent" means a compound which acts on silver metal to convert it into a silver ion. An especially effective compound is one which converts into silver ions the ultrafine silver grains yielded as a by-product during the formation of silver halide grains and during chemical sensitization. The silver ions which generate here may form a sparingly water-soluble silver salt such as, e.g., a silver halide, silver sulfide, or silver selenide or may form a water-soluble silver salt such as silver nitrate. The silver-oxidizing agent may be an inorganic substance or an organic substance. Examples of the inorganic oxidizing agent include ozone, hydrogen peroxide and adducts thereof (e.g., NaBO₂·H₂O₂·3H₂O, 2NaCO₃·3H₂O₂, Na₄P₂O₇·2H₂O₂, and 2Na₂SO₄·H₂O₂·2H₂O), oxy acid salts such as peroxy acid salts (e.g., K₂S₂O₈, K₂C₂O₆, and K₂P₂O₈), peroxy complex compounds (e.g., K₂[Ti(O₂)C₂O₄]·3H₂O, 4K₂SO₄·Ti(O₂) OH·SO₄·2H₂O, and Na₃[VO(O₂)(C₂H₄)₂]·6H₂O), permanganates (e.g., KMnO₄), and chromates (e.g., K₂Cr₂O₇), halogen elements such as iodine and bromine, perhalogenates (e.g., potassium periodate), salts of high-valence metals (e.g., potassium hexacyanoferric salt), and thiosulfonates.

Examples of the organic oxidizing agent include quinones such as p-quinone, organic peroxides such as peracetic acid and perbenzoic acid, and compounds releasing an active halogen (e.g., N-bromosuccinimide, chloramine T, and chloramine B).

Preferred examples of the oxidizing agent for use in the invention include inorganic oxidizing agents which are ozone, hydrogen peroxide and adducts thereof, halogen elements, and thiosulfonates and organic oxidizing agents which are quinones. In a preferred embodiment, the silver-oxidizing agent is used in combination with the reduction sensitization described above. For this embodiment, use can be made of a method selected from: a method in which the oxidizing agent is used and reduction sensitization is conducted thereafter; a method which is the reverse of that method; and a method in which the oxidizing agent is used simultaneously with reduction sensitization. Any of these methods can be selected and used also in the step of grain formation or in the step of chemical sensitization.

It is especially preferred that the silver halide photosensitive material for holography in the invention should contain the hydrazine compound having a group adsorbable onto silver halides as shown in JP-A-07-134351, the hydroxamic acid compound shown in JP-A-08-114884 and JP-A-08-314051, the hydroxysemicarbazide compound shown in JP-A-10-090819, and the hydroxylamine compound having a group adsorbable onto silver halides as shown in JP-A-2002-323729.

The timing of addition of these compounds can be selected from the period for the formation of emulsion grains to application. Preferably, however, the timing thereof is during chemical sensitization or in the period from the sensitization to application. The amount of those compounds to be added also is not limited. However, there are cases where use of the compounds in large excess, e.g., at least 10 times the amount shown in those patent documents, is preferred in view of the nature of ultrafine emulsions. A specific addition amount can be experimentally determined with ease.

It is preferred that the photosensitive material for use in the invention should contain a compound which, through one-electron oxidation, yields a one-electron-oxidized form capable of releasing one or more electrons. This compound is selected from the following types 1 and 2.

### (Type 1)

Compounds whose one-electron-oxidized form, which has been yielded through one-electron oxidation, is capable of releasing further one or more electrons while being accompanied by a subsequent bond cleavage reaction.

### (Type 2)

Compounds whose one-electron-oxidized form, which has been yielded through one-electron oxidation, is capable of undergoing a subsequent bond formation reaction and then releasing further one or more electrons.

First, the compounds of type 1 are explained.

Examples of the compounds of type 1, i.e., compounds whose one-electron-oxidized form, which has been yielded through one-electron oxidation, is capable of releasing further one or more electrons while being accompanied by a subsequent bond cleavage reaction, include the compounds called "one-photon two-electron sensitizers" or "deprotonating electron-donating sensitizers" given in, e.g., JP-A-9-211769 (examples: Compounds PMT-1 to S-37 shown in Tables E and F on pages 28-32), JP-A-9-211774, JP-A-11-95355 (examples: Compounds INV 1 to 36), JP-T-2001-500996 (examples: Compounds 1 to 74, 80 to 87, and 92 to 122), U.S. Patents Nos. 5,747,235 and 5,747,236, European Patent No. 786692 A1 (examples: Compounds INV 1 to 35), European Patent No. 893732 A1, and U.S. Patents Nos. 6,054,260 and 5,944,051. Preferred ranges of the amounts of these compounds to be added are the same as the preferred ranges shown in the patent specifications cited above.

Other examples of the compounds of type 1, i.e., compounds whose one-electron-oxidized form, which has been yielded through one-electron oxidation, is capable of releasing further one or more electrons while being accompanied by a subsequent bond cleavage reaction, include compounds represented by the following general formula (1) (same as the general formula (1) given in JP-A-2003-114487), general formula (2) (same as the general formula (2) given in JP-A-2003-114487), general formula (3) (same as the general formula (I) given in JP-A-2003-114488), general formula (4) (same as the general formula (2) given in JP-A-2003-114488), general formula (5) (same as the general formula (3) given in JP-A-2003-114488), general formula (6) (same as the general formula (1) given in JP-A-2003-75950), general formula (7) (same as the general formula (2) given in JP-A-2003-75950), or general formula (8) (same as the general formula (1) given in JP-A-2004-239943 (Application No. 2003-25886)) and those compounds capable of undergoing the reaction represented by the following reaction formula (1) (same as the reaction formula (1) given in Japanese Patent Application No. 2003-33446) which are represented by the following general formula (9) (same as the general formula (3) given in JP-A-2004-245929 (Application No. 2003-33446)). Preferred ranges of the amounts of these compounds to be added are the same as the preferred ranges shown in the patent specifications cited above.

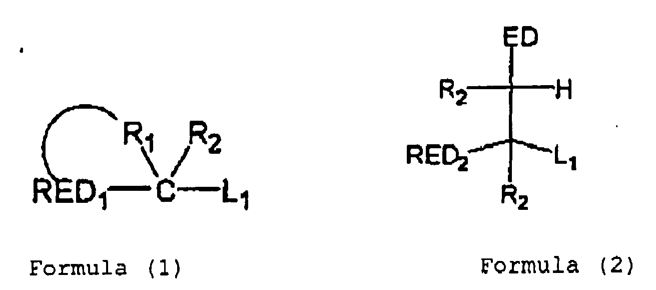

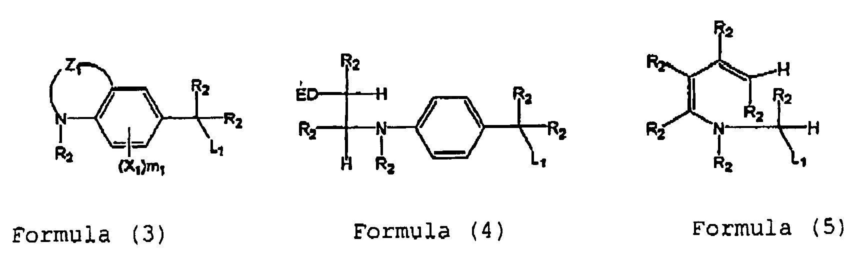

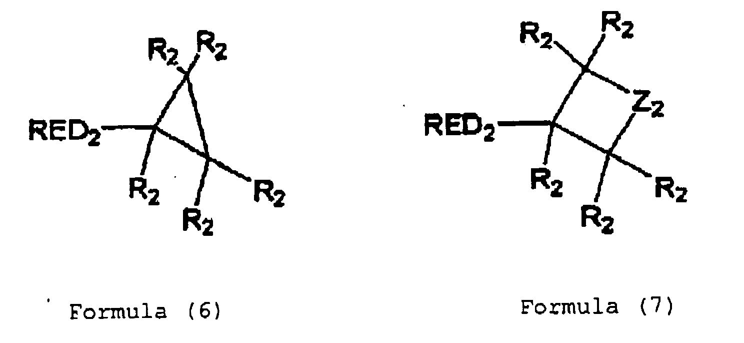

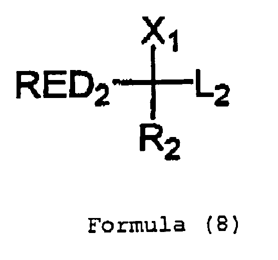

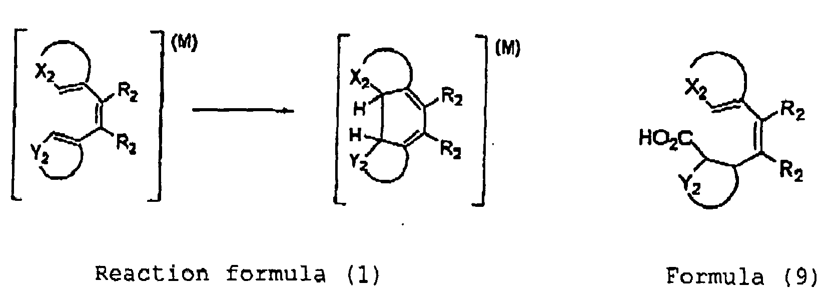

In the formulae, RED₁ and RED₂ each represent a reducing group. R₁ represents a group of non-metallic atoms which, in cooperation with the carbon atom (C) and the RED₁, is capable of forming a ring structure corresponding to a tetrahydro or octahydro form of a 5- or 6-membered aromatic ring (including aromatic heterocycle). R₂ represents a hydrogen atom or a substituent. When two or more R₂'s are present in the same molecule, they may be the same or different. L₁ represents a leaving group. ED represents an electron-donating group. Z₁ represents a group of atoms which is capable of forming a 6-membered ring in cooperation with the nitrogen atom and the two carbon atoms of the benzene ring. X₁ represents a substituent. Symbol m1 represents an integer of 0-3. Z₂ represents -CR₁₁R₁₂-, -NR₁₃-, or -O-, R₁₁ and R₁₂ each independently represent a hydrogen atom or a substituent. R₁₃ represents a hydrogen atom, alkyl group, aryl group, or heterocyclic group. X₁ represents an alkoxy group, aryloxy group, heterocycle-oxy group, alkylthio group, arylthio group, heterocycle-thio group, alkylamino group, arylamino group, or heterocycle-amino group. L₂ represents carboxy, a salt thereof, or a hydrogen atom. X₂ represents a group forming a 5-membered heterocycle in cooperation with the C=C. Y₂ represents a group forming a 5- or 6-membered aryl or heterocyclic group in cooperation with the C=C. M represents a radical, radical cation, or cation.

Next, the compounds of type 2 are explained.

Examples of the compounds of type 2, i.e., compounds whose one-electron-oxidized form, which has been yielded through one-electron oxidation, is capable of releasing further one or more electrons while being accompanied by a subsequent bond formation reaction, include compounds represented by the following general formula (10) (same as the general formula (1) given in JP-A-2003-140287) and those compounds capable of undergoing the reaction represented by the following reaction formula (1) (same as the reaction formula (1) given in JP-A-2004-245929 (Application No. 2003-33446)) which are represented by the following general formula (11) (same as the general formula (2) given in JP-A-2004-245929 (Application No. 2003-33446)). Preferred ranges of the amounts of these compounds to be added are the same as the preferred ranges shown in the patent specifications cited above.

X - L₂ - Y Formula (10)

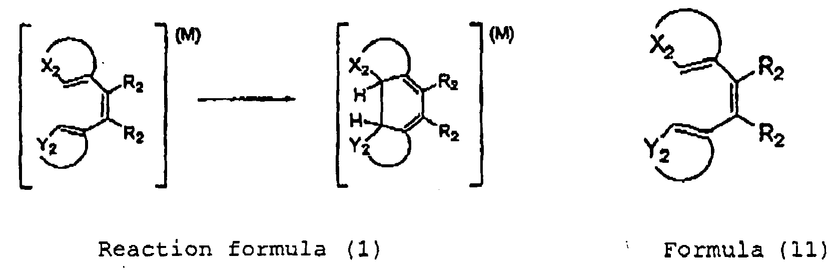

In the formulae, X represents a reducing group undergoing one-electron oxidation. Y represents a reactive group which comprises a carbon-carbon double-bond part, a carbon-carbon triple-bond part, an aromatic-group part, or a non-aromatic heterocyclic part of a fused benzo-ring and is capable of forming a new bond through reaction with a one-electron-oxidized form to be yielded by the one-electron oxidation of X. L₂ represents a connecting group which connects X to Y. R₂ represents a hydrogen atom or a substituent. When two or more R₂'s are present, they may be the same or different. X₂ represents a group forming a 5-membered heterocycle in cooperation with the C=C. Y₂ represents a group forming a 5- or 6-membered aryl or heterocyclic group in cooperation with the C=C. M represents a radical, radical cation, or cation.

Preferred of the compounds of types 1 and 2 are "compounds having in the molecule a group adsorbable onto silver halides" or "compounds having a partial structure of a spectral sensitizer dye in the molecule". Typical examples of the group adsorbable onto silver halides include the groups shown in JP-A-2003-156823, from page 16, right column, line 1 to page 17, right column, line 12. The partial structure of a spectral sensitizer dye is the structure described in that patent specification, from page 17, right column, line 34 to page 18, left column, line 6.

More preferred of the compounds of types 1 and 2 are "compounds having in the molecule at least one group adsorbable onto silver halides". Even more preferred are "compounds having in the same molecule two or more groups adsorbable onto silver halides". When two or more adsorbable groups are present in each molecule, these adsorbable groups may be the same or different.

Preferred examples of the adsorbable group include mercapto-substituted nitrogen-containing heterocyclic groups (e.g., a 2-mercaptothiadiazole group, 3-mercapto-1,2,4-triazole group, 5-mercaptotetrazole group, 2-mercapto-1,3,4-oxadiazole group, 2-mercaptobenzoxazole group, 2-mercaptobenzthiazole group, and 1,5-dimethyl-1,2,4-triazolium-3-thiolate group) and nitrogen-containing heterocyclic groups having, as a partial structure of the heterocycle, an -NH- group capable of forming iminosilver (>NAg) (e.g., a benzotriazole group, benzimidazole group, and indazole group). Especially preferred are a 5-mercaptotetrazole group, 3-mercapto-1,2,4-triazole group, and benzotriazole group. Most preferred are a 3-mercapto-1,2,4-triazole group and a 5-mercaptotetrazole group.

A compound having in the molecule an adsorbable group having two or more mercapto groups as partial structures is also preferred. In the case where this compound is capable of tautomerism, the mercapto groups (-SH) may be present as thione groups. Preferred examples of the adsorbable group having two or more mercapto groups as partial structures (e. g. , dimercapto-substituted nitrogen-containing heterocyclic groups) include a 2,4-dimercaptopyrimidine group, 2,4-dimercaptotriazine group, and 3,5-dimercapto-1,2,4-trizole group.

Quaternary salt structures of nitrogen or phosphorus are also preferred as adsorbable groups. Examples of the quaternary salt structures of nitrogen include groups containing either an ammonio group (e.g., a trialkylammonio group, dialkylaryl- (or heteroaryl)ammonio group, or alkyldiaryl- (or heteroaryl)ammonio group) or a nitrogen-containing heterocyclic group containing a quaternized nitrogen atom. Examples of the quaternary salt structures of phosphorus include phosphonio groups (e.g., trialkylphosphonio groups, dialkylaryl- (or heteroaryl)phosphonio groups, alkyldiaryl- (or heteroaryl)phosphonio groups, and triayl- (or heteroaryl)phosphonio groups). More preferred are quaternary salt structures of nitrogen. Even more preferred are 5- or 6-membered nitrogen-containing aromatic heterocyclic groups containing a quaternized nitrogen atom. Especially preferred are a pyridinio group, quinolinio group, and isoquinolinio group. These nitrogen-containing heterocyclic groups containing a quaternized nitrogen atom may have any desired substituents.

Examples of the counter anions of the quaternary salts include halogen ions, carboxylate ions, sulfonate ions, sulfate ion, perchlorate ion, carbonate ion, nitrate ion, BF₄⁻, PF₆⁻, and Ph₄B⁻. In the case of a quaternary salt having in the molecule a carboxylate group or the like in which a negatively charged group is present, this compound may be in the form of an internal salt involving the negatively charged group. An especially preferred counter anion present outside the molecule is a chlorine ion, bromine ion, or methanesulfonate ion.

Preferred structures of the compounds of types 1 and 2 which have a quaternary salt structure of nitrogen or phosphorus as an adsorbable group are represented by general formula (X).

(P-Q₁-)ᵢ-R(-Q₂ -S)ⱼ Formula (X)

In general formula (X), P and R each independently represent a quaternary nitrogen or phosphorus salt structure which is not a partial structure of a sensitizer dye. Q₁ and Q₂ each independently represent a connecting group, and specifically represent one of a single bond, alkylene group, arylene group, heterocyclic group, -O-, -S-, -NR_{N}-, -C(=O)-, -SO₂-, -SO-, and -P(=O)- or a combination of two or more thereof, provided that R_{N} represents a hydrogen atom, alkyl group, aryl group, or heterocyclic group. S is a residue formed by removing one atom from a compound of type 1 or 2. Symbols i and j each are an integer of 1 or larger, provided that i+j is in the range of 2-6. Preferably, i is 1-3 and j is 1 or 2. More preferably, i is 1 or 2 and j is 1. Especially preferably i is 1 and j is 1. The compounds represented by general formula (X) each are one in which the total number of carbon atoms is in the range of preferably 10-100, more preferably 10-70, even more preferably 11-60, especially preferably 12-50.

Compounds of types 1 and 2 according to the invention may be used at any time during emulsion preparation and in the course of photosensitive-material production. For example, the compounds may be used during grain formation, in a desalting step, during chemical sensitization, before application, etc. It is also possible to add the compounds in two or more portions during these steps. The timing of addition is preferably during the period from the completion of grain formation to before a desalting step, during chemical sensitization (during the period from just before the initiation of chemical sensitization to just after the completion thereof), or before application, and is more preferably during chemical sensitization or before application.

It is preferred that the compound of type 1 or type 2 according to the invention be added in the form of a solution in water or a water-miscible solvent such as methanol or ethanol or in a mixed solvent comprising these. In the case where water is used as a solvent, a compound which shows higher solubility at increased or reduced pH values may be dissolved in water having an increased or reduced pH and this solution may be added.

The compound of type 1 or type 2 according to the invention is used preferably in the emulsion layer. However, use may be made of a method in which the compound is added to a protective layer or interlayer besides the emulsion layer and is diffused after application. The timing of addition of the compound according to the invention may be either before or after chemical sensitization, In either case, the compound is incorporated into the silver halide emulsion layer in an amount of preferably 1×10⁻⁹ to 5×10⁻² mol, more preferably 1×10⁻⁸ to 2×10⁻³ mol, per mol of the silver halide.

Although the various additives described above are usable in the photosensitive material for use in the invention, other various additives can be used according to purposes.

Those additives are described in more detail in *Research Disclosure,* Item 17643 (December 1978), *Research Disclosure,* Item 18716 (November 1979), and *Research Disclosure,* Item 308119 (December 1989); the relevant parts thereof are summarized in the following table.

| Kind of Additive | RD 17643 | RD 18716 | RD 308119 |
|---|---|---|---|
| 1 Chemical sensitizer | page 23 | page 648, right column | page 996 |
| 2 Sensitivity enhancer | | ditto | |
| 3 Spectral sensitizer, supersensitizing agent | pages 23-24 | page 648, right column to page 649, right column | page 996, right column to page 998, right column |
| 4 Brightener | page 24 | page 647, right column | page 998, right column |
| 5 Antifoggant and stabilizer | pages 24-25 | page 649, right column | page 998, right column to page 1000, right column |
| 6 Light absorber, filter dye, ultraviolet absorber | pages 25-26 | page 649, right column to page 650, left column | page 1003, left column to page 1003, right column |
| 7 Antistain agent | page 25, right column | page 650, left to right column | page 1002, right column |
| 8 Dye image stabilizer | page 25 | | page 1002, right column |
| 9 Hardener | page 26 | page 651, left column | page 1004, right column to page 1005, left column |
| 10 Binder | page 26 | ditto | page 1003, right column to page 1004, right column |
| 11 Plasticizer, lubricant | page 27 | page 650, right column | page 1006, left column to page 1006, right column |
| 12 Coating aid, surfactant | pages 26-27 | ditto | page 1005, left column to page 1006, left column |
| 13 Antistatic agent | page 27 | ditto | page 1006, right column to page 1007, left column |
| 14 Matting agent | | | page 1008, left column to page 1009, left column |

It is also preferred that the compound capable of reacting with formaldehyde to fix it as described in U.S. Patents Nos. 4,411,987 and 4,435,503 be added to the photosensitive material in order to prevent photographic performances from being deteriorated by formaldehyde gas.

It is preferred to add to the photosensitive material according to the invention any of various antiseptics and fungicides such as phenethyl alcohol and the antiseptic or fungicidal compounds shown in JP-A-63-257747, JP-A-62-272248, and JP-A-1-80941, e.g., 1,2-benzisothiazolin-3-one, n-butyl p-hydroxybenzoate, phenol, 4-chloro-3,5-dimethylphenol, 2-phenoxyethanol, and 2-(4-thiazolyl)benzimidazole.

With respect to methods of interference wave recording on the silver halide photosensitive material for holography, methods of processing the photosensitive material, methods of reproduction, and methods of use in the invention, reference may be made to the latest knowledge in the technical and scientific field of holography. Typical examples of reference books include Toshihiro Kubota, Horogurafi Numon, Genri To Jissai, Asakura Shoten, 1995. The photosensitive material in the invention is, of course, usable in the applications described in such reference books. Because the photosensitive material has high sensitivity, high image quality, and stability, it can be easily used in such applications.

### [Examples]

The invention will be explained below in detail by reference to the following Example, in which the photosensitive material according to the invention is illustrated. However, the invention should not be construed as being limited to the following Example.

### [EXAMPLE 1]

The silver halide photosensitive material for holography according to the invention is explained in detail.

### (Preparation of Emulsion (a))

1,660 mL of an aqueous solution containing 0.28 g of KBr and 43.3 g of deionized ossein gelatin having a number-average molecular weight of 100,000 was stirred at a constant temperature of 33°C. Thereto was added 0.04 g of thiourea dioxide. Thereafter, the pH of the resultant mixture was adjusted to 6.0. Thereto were added 800 mL of an aqueous solution of AgNO₃ (96.0g) and an aqueous KBr solution containing 1 mol% KI by the double-jet method over 15 minutes. During this operation, the silver potential was kept at +20 mV based on a saturated-calomel electrode. At 2 minutes after initiation of the addition of the aqueous AgNO₃ solution for grain formation, an aqueous K₃IrCl₆ solution was added in an amount of 5×10⁻⁴ mol per mol of the silver halide. Supersensitizing agent I was added in an amount of 3×10⁻⁴ mol per mol of the silver halide. Thereafter, sensitizer dyes I and II were added in a molar proportion of 50:50 to the resultant mixture in an amount of 9×10⁻⁴ mol per mol of the silver halide. In this experiment, the sensitizer dyes were used in the form of a fine solid dispersion prepared by the method described in JP-A-11-52507. Namely, a dispersion of each solid sensitizer dye was obtained by dissolving 0.8 parts by mass of sodium nitrate and 3.2 parts by mass of sodium sulfate in 43 parts by mass of ion-exchanged water, adding 13 parts by mass of the sensitizer dye thereto, and treating the resultant mixture with dissolver blades at 2,000 rpm for 20 minutes under the conditions of 60°C to disperse the dye. (In this specification, mass ratio is equal to weight ratio.)

The temperature of the reaction mixture was lowered to 28°C, and the mixture was then subjected to ordinary water washing. Thereto was added 21 g of deionized ossein gelatin having a number-average molecular weight of 20,000. The p_{H} of the resultant mixture was adjusted to 6.0 at 40°C. After this mixture was heated to 60°C, thiourea dioxide (3×10⁻⁵ mol), chloroauric acid (5.5×10⁻⁴ mol), sodium thiosulfate (9.9×10⁻⁴ mol), and N,N-dimethylselenourea (1.7×10⁻⁴ mol) were added per mol of the silver halide to conduct chemical sensitization in an optimal manner. Antifoggants I (1.0×10⁻³ mol) and II (3.5×10⁻³ mol) were added thereto to complete the chemical sensitization.

The emulsion (a) thus obtained contained cubic grains with clear vertices which had a number-average equivalent-circle diameter of 32 nm and a coefficient of variation of the equivalent-circle diameters of 9%. These grains were silver bromide grains which contained 1 mol% silver iodide and in which the coefficient of variation of the inter-grain distribution of silver iodide content was 7%.

### Sensitizer dye I

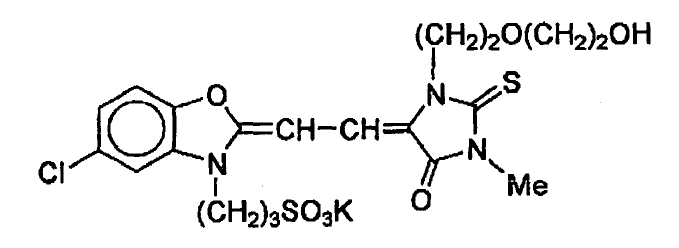

### Sensitizer dye II

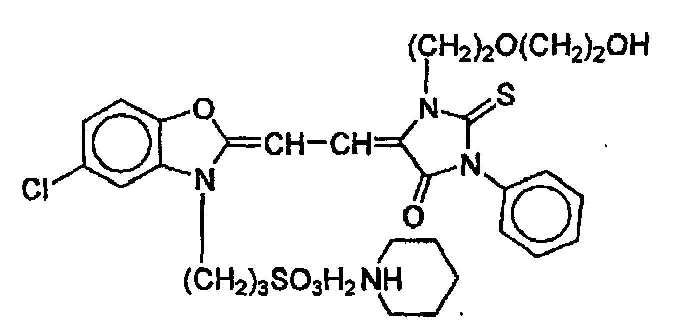

### Supersensitizing agent I

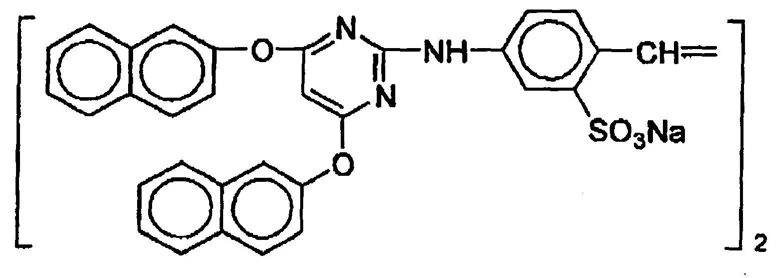

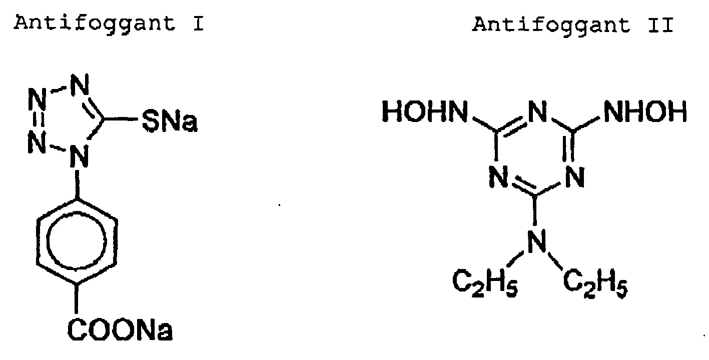

The emulsion which had undergone chemical sensitization was applied under the coating conditions shown in the following Table 1 to a cellulose triacetate film substrate having a thickness of 200 µm and having an undercoat layer. Thus, a coated sample was produced.

**<Table 1>**

| Coating Conditions | |
|---|---|
| [1] | Emulsion (silver, 3.00 g/m²) |
| [2] | Gelatin (4.00 g/m²) |
| [3] | Hydroquinone (1.00×10⁻² mol/mol-Ag) |
| | 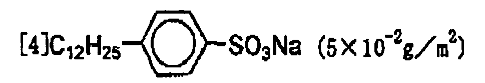 |
| | 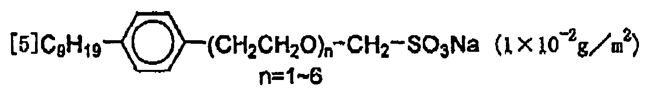 |
| | 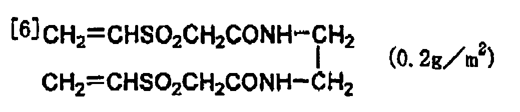 |
| [7] | Other additives |
| | 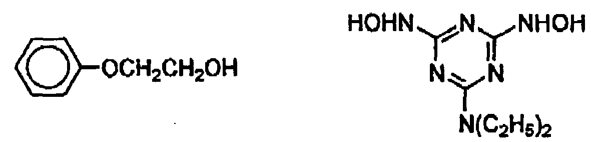 |
| | 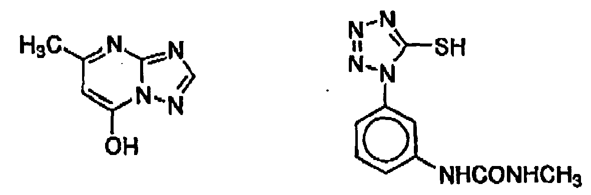 |
| | 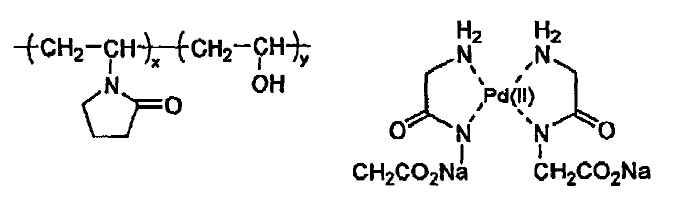 |
| x/y=70/30 (by mass) | |
| Average molecular weight:about 17,000 | |

An electroconductive layer and a back layer were formed on the coated sample in the following manners.

### <Preparation and Application of Coating Fluid for Electroconductive Layer>

The following compounds were added to an aqueous gelatin solution, and the resultant coating fluid was applied in such an amount as to result in a gelatin amount of 0.06 g /m² .

| | |
|---|---|
| SnO₂/Sb (9/1 by mass; average particle diameter, 0.25 µm) | 186 mg/m² |
| Gelatin (Ca⁺⁺ content, 3,000 ppm) | 60 mg/m² |
| Sodium p-dodecylbenzenesulfonate | 13 mg/m² |
| Sodium dihexyl α-sulfosuccinate | 12 mg/m² |
| Poly(sodium styrenesulfonate) | 10 mg/m² |
| Compound A | 1 mg/m² |

### <Preparation and Application of Coating Fluid for Back Layer>

The following compounds were added to an aqueous gelatin solution, and the resultant coating fluid was applied in such an amount as to result in a gelatin amount of 1.94 g/m².

| | |
|---|---|
| Gelatin (Ca⁺⁺ content, 30 ppm) | 1.94 g/m² |
| Fine particles of poly(methyl methacrylate) (average particle diameter, 3.4 µm) | 15 mg/m² |
| Sodium p-dodecylbenzenesulfonate | 7 mg/m² |
| Sodium dihexyl α-sulfosuccinate | 29 mg/m² |
| N-Perfluorooctanesulfonyl-N-propylglycine Potassium | 5 mg/m² |
| Sodium sulfate | Sodium sulfate |
| Sodium acetate | 40 mg/m² |
| Compound E (hardener) | 105 mg/m² |
| Compound C | 15 mg/m² |

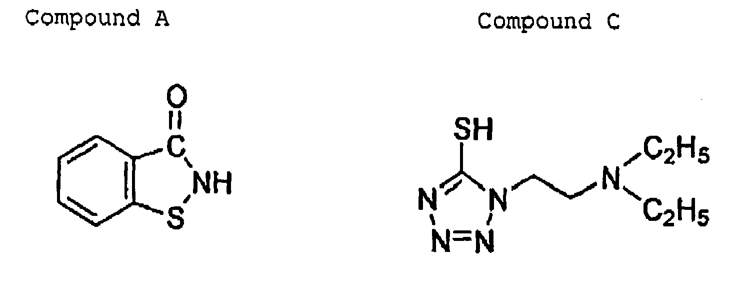

### Compound E

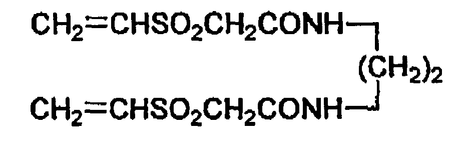

This sample was allowed to stand for 14 hours under the conditions of 40°C and a relative humidity of 70%. Thereafter, the optical system described in the Fig. 1 of JP-A-2005-309359 was used to cause the light from an Nd-YAG laser light source (532 nm) to strike on the sample from two directions with a two-beam interference exposure apparatus. Thus, samples having gradually changing exposure amounts were produced. These samples were processed with the developing solution CW-C2 and bleaching solution PBQ-2 described in Toshihiro Kubota, Horogurafi Nyumon -Genri To Jissai-, 1995, Asakura Shoten Shuppan, p.159. The samples were then washed with water and dried. Thus, the amount of light bringing about a maximum diffraction efficiency (sensitivity) and this value of diffraction efficiency were determined in the same manner as the measuring method described in JP-A-2005-309359. A haze measurement also was made. As a result, the exposure amount bringing about a maximum diffraction efficiency was found to be 50 µJ/cm², and this diffraction efficiency was 61%. The haze was found to be 13. Furthermore, the laser used as a light source was replaced by an He-Ne laser (633 nm) to conduct the same examination. As a result, the amount of light bringing about a maximum diffraction efficiency was found to be 100 µJ/cm², and this diffraction efficiency was 63%. The haze was 13.

When this photosensitivematerial is used for hologram production with the exposure apparatus according to the invention, a hologram having satisfactory image quality can be produced at a high speed. A hologram of 30x30 cm can be produced through 10-minute exposure and 10-minute processing. Exposure and development can be successively conducted.

Three-dimensional image information on a man obtained with two or more digital cameras are subjected to color separation into R, G, and B to obtain two-dimensional parallactic images viewed from left-hand and right-hand directions only. A hologram is produced from these two-dimensional parallactic images. This hologram is a color hologram having satisfactory brightness and giving a satisfactory three-dimensional feeling. On the other hand, when two-dimensional parallactic images which include ones viewed from left-hand and right-hand directions and ones viewed from upper and lower directions and have been obtained from a three-dimensional model produced from a computer graphic are used to form a hologram, then this hologram gives an image giving a more natural three-dimensional feeling.

The photosensitive material employing POEA which is described in an Example in JP-A-6-43634 was subjected as a comparative material to the same examinations. As a result, the optimal exposure amount was 20, 000 µJ/cm² and the diffraction efficiency at this exposure amount was 75%. The haze was 8. This material, when subjected to high-speed printing with the exposure apparatus according to the invention, cannot be exposed in a necessary amount. A hologram cannot be produced therefrom.

An explanation is then given on processings after development.

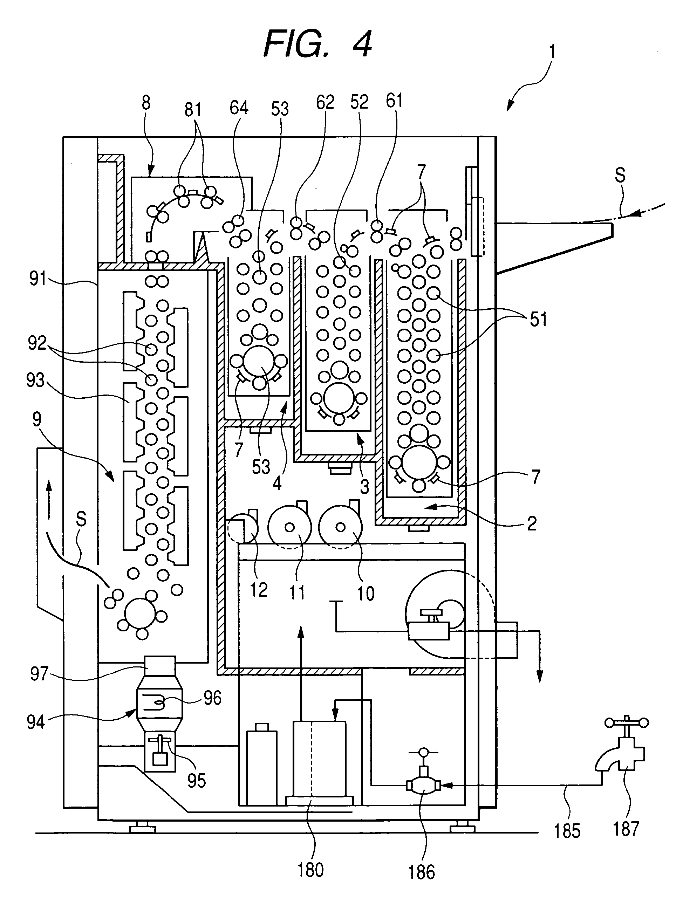

Fig. 4 shows an example of the constitution of an automatic processor for use in the invention.

The automatic processor 1 shown in Fig. 4 has a developing tank 2, a bleaching tank 3, and a water-washing tank 4 for containing a developing solution, bleaching solution, and washing water, respectively. These tanks 2, 3, and 4 are disposed in the main body case in this order from the right side in the figure.

The developing tank 2 has conveying rollers 51 disposed therein for conveying a photosensitive material S through a given passage in the tank. The bleaching tank 3 and the water-washing tank 4 also have the same conveying rollers 52 and 53.

Crossover rollers 61, 62, and 64 are disposed respectively between the processing tanks 2 and 3, between the processing tanks 3 and 4, and between the processing tank 4 and a squeeze part 8, which will be described later. These crossover rollers 61, 62, and 64 each sandwich the photosensitive material and thereby squeeze out the processing liquid adherent to the surfaces of the photosensitive material. The rollers each thus serve to inhibit the processing liquid from being carried from the preceding tank to the following tank.

It is preferred that these crossover rollers should have a constitution in which roller fouling by the adhesion of developing solution ingredients and bleaching solution ingredients is prevented by, e.g., washing with water.

Furthermore, guides 7 for leading the photosensitive material to next rollers are disposed between rollers near, e.g., the bottom of each of the processing tanks 2 to 4 and on both sides of each of the crossover rollers 61 and 62.

It is preferred that the conveying rollers 51 to 53 and the guides 7 should be disposed in the respective processing tanks in the form of an assembly based on a rack.

The photosensitive material introduced into the main body case is conveyed successively through the developing tank 2, bleaching tank 3, and water-washing tank 4 with the rollers 51-53, 61, 62, and 64. During the conveyance, the photosensitive material is immersed in the processing liquids and thus undergoes development, bleaching, and water washing.

In each of the processing tanks 2 to 4, replenishment with a processing liquid suitable therefor and liquid discharge are performed. Preferably, the processing liquid is circulated in each tank.

It is preferred that in the developing tank 2, bleaching tank 3, and water-washing tank 4, the processing liquids be circulated. For the circulation in these tanks, circulating pumps 10, 11, and 12 are used respectively. A circulating part of the water-washing tank 4 will be described later.

Washing water for the water-washing tank 4 and water necessary for other purposes are supplied from a stock tank 180. Water supply to this stock tank 180 is made through a piping 185 extending from a water source (service-water tap) 187, and the flow rate thereof is regulated with a valve 186. Alternatively, washing water may be supplied to the water-washing tank 4 directly from the service-water tap 187 without using the stock tank 180.

A squeeze part 8 is disposed on the upper left side, in Fig. 4, of the water-washing tank 4. This squeeze part 8 has two or more pairs of squeeze rollers 81 disposed along the conveyance passage for the photosensitive material. These squeeze rollers 81 sandwich and convey the photosensitive material which has been washed with water, whereby water is removed from the photosensitive material.

A drying part 9 is disposed on the lower side, in Fig. 4, of the squeeze part 8. This drying part 9 includes a casing 91 and a hot-air feeder 94 which supplies hot air for drying into the casing 91. Conveying rollers 92 and guides 93 are disposed in the casing 91 along a conveyance passage for the photosensitive material.

The hot-air feeder 94 has a built-in air blower 95 and a built-in heater 96. It supplies hot air heated to preferably about 35-100°C (more preferably about 40-80°C) into the casing 91 through a duct 97 connected to the casing 91. In the casing 91, the photosensitive material which has passed through the squeeze part 8 is conveyed with the conveying rollers 92 and dried by contact with the hot air supplied.

According to the constitution described above, in which a recording material having high sensitivity and high image quality is used in combination with a high-speed exposure apparatus, productivity is improved. Furthermore, by converting three-dimensional information to two or more two-dimensional parallactic images and sending these images in the compact form, it has become possible to set an exposure apparatus and a processor in one place located apart from the original three-dimensional information. The system can hence be used in a wider range of applications.

The entire disclosure of each and every foreign patent application from which the benefit of foreign priority has been claimed in the present application is incorporated herein by reference, as if fully set forth.

## Claims

1. A hologram production method for producing a hologram that reproduces a three-dimensionalimagefrom digital information on a three-dimensional image, the method comprising the following steps [4] to [6]:
step [4] : converting digital image information about two or more two-dimensional parallactic images into a recorded image for holographic stereography;
step [5]: holographically exposing with an exposure apparatus a specific silver halide photosensitive material for holography utilizing the recorded image converted in step [4] to print a three-dimensional image on the silver halide photosensitive material by holographic stereography; and
step [6] : subjecting the silver halide photosensitive material printed in step [5] to a development processing,
wherein the exposure apparatus in step [5] is of a type in which sets of partial data respectively synthesized through conversion from the two or more two-dimensional parallactic images so as to form partial element holograms are successively displayed on an SLM, and the images displayed on the SLM are successively recorded through an exposure head utilizing at least one laser as a light source, while shifting a position of the exposure head together with a reference beam, by moving the exposure head to continuously scan in a recording direction X and intermittently conveying the silver halide photosensitive material in a direction Y to thereby expose the silver halide photosensitive material to form the partial element holograms on the silver halide photosensitive material;
the exposure light source intermittently illuminates at a frequency of 100 Hz or higher for a light emission period of 1 µs or shorter so as to interlock with the image displayed on the SLM; and
the silver halide photosensitive material for holography utilized in steps [5] and [6] is a silver halide photosensitive material for holography which comprises: a substrate; and at least one photosensitive silver halide emulsion layer formed over the substrate and containing silver halide grains having a number-average diameter in terms of a diameter of equivalent circles of 10 to 50 nm, and which has an optimal exposure amount in exposure with the laser light source of 500 µJ/cm² or smaller, and the silver halide photosensitive material for holography after the development processing has a haze of 20 or lower and a diffraction efficiency of 50% or higher, and the silver halide photosensitive material for holography is treated in a development processing step.

2. The hologram production method according to claim 1,
wherein the two or more two-dimensional parallactic images in step [4] are obtained through the following steps [1] to [3] :
step [1]: extracting two or more two-dimensional parallactic images from three-dimensional information with an image processor;
step [2] : transmitting the two or more two-dimensional parallactic images obtained in step [1],
step [3]: storing the two or more two-dimensional parallactic images transmitted in step [2] in a server.

3. The hologram production method according to claim 1, which further comprises a step in which image information about color separation into three colors of R, G and B is obtained from the three-dimensional information so as to enable the hologram to be reproduced in full colors and regulation is conducted so that the reproduced colors on the hologram can have a color balance according to laser light source wavelengths and regeneration wavelengths for the holographic material,
wherein the hologram is a hologram obtained by color reproduction through exposure for images of the respective colors with three laser light sources for R, G and B, and
the silver halide photosensitive material has been spectrally sensitized so as to have sensitivity to three laser lights of R, G and B.

4. The hologram production method according to claim 2,
wherein the image processor for extracting two or more two-dimensional parallactic images from three-dimensional information in step [1] is an image processor which includes two or more digital cameras disposed in a parallax direction and which performs stereophotographing with the cameras and interpolates the parallactic images obtained by the stereophotographing.

5. The hologram production method according to claim 1,
wherein the parallax directions for the two-dimensional parallactic images are vertical and horizontal directions (full-parallax).

6. The hologram production method according to claim 2,
wherein data are transmitted from two or more places located apart where steps [1] and [2] are conducted, and hologram production is centered on the exposure apparatus installed in one place.

7. A hologram production system for producing a hologram that reproduces a three-dimensional image from digital information on a three-dimensional image, the system comprising apparatuses executing the following steps [4] to [6], respectively:
step [4]: an apparatus which converts digital image information about two or more two-dimensional parallactic images into a recorded image for holographic stereography;
step [5]: an exposure apparatus which holographically exposes a specific silver halide photosensitive material for holography utilizing the recorded image converted in step [4] to print a three-dimensional image on the silver halide photosensitive material by holographic stereography; and
step [6] : an apparatus which subjects the silver halide photosensitive material printed in step [5] to a development processing,
wherein the exposure apparatus in step [5] is of a type in which sets of partial data respectively synthesized through conversion from the two or more two-dimensional parallactic images so as to form partial element holograms are successively displayed on an SLM, and the images displayed on the SLM are successively recorded through an exposure head utilizing at least one laser as a light source, while shifting a position of the exposure head together with a reference beam, by moving the exposure head to continuously scan in a recording direction X and intermittently conveying the silver halide photosensitive material in a direction Y to thereby expose the silver halide photosensitive material to form the partial element holograms on the silver halide photosensitive material;
the exposure light source intermittently illuminates at a frequency of 100 Hz or higher for a light emission period of 1 µs or shorter so as to interlock with the image displayed on the SLM; and
the silver halide photosensitive material for holography utilized in steps [5] and [6] is a silver halide photosensitive material for holography which comprises: a substrate; and at least one photosensitive silver halide emulsion layer formed over the substrate and containing silver halide grains having a number-average diameter in terms of a diameter of equivalent circles of 10 to 50 nm, and which has an optimal exposure amount in exposure with the laser light source of 500 µJ/cm² or smaller, and the silver halide photosensitive material for holography after the development processing has a haze of 20 or lower and a diffraction efficiency of 50% or higher, and the silver halide photosensitive material for holography is treated in a development processing step.

8. The hologram production system according to claim 7, which further comprises apparatuses executing the following steps [1] to [3] respectively so as to obtain the two or more two-dimensional parallactic images in step [4]:
step [1]: an image processor which extracts two or more two-dimensional parallactic images from three-dimensional information;
step [2]: an apparatus which transmits the two or more two-dimensional parallactic images obtained in step [1],
step [3]: an apparatus which stores the two or more two-dimensional parallactic images transmitted in step [2] in a server.

9. The hologram production system according to claim 7, which includes a step in which image information about color separation into three colors of R, G and B is obtained from the three-dimensional information so as to enable the hologram to be reproduced in full colors and regulation is conducted so that the reproduced colors on the hologram can have a color balance according to laser light source wavelengths and regeneration wavelengths for the holographic material,
wherein the hologram is a hologram obtained by color reproduction through exposure for images of the respective colors with three laser light sources for R, G and B, and
the silver halide photosensitive material has been spectrally sensitized so as to have sensitivity to three laser lights of R, G and B.

10. The hologram production system according to claim 8,
wherein the image processor for extracting two or more two-dimensional parallactic images from three-dimensional information in step [1] is an image processor which includes two or more digital cameras disposed in a parallax direction and which performs stereophotographing with the cameras and interpolates the parallactic images obtained by the stereophotographing.

11. The hologram production system according to claim 7,
wherein the parallax directions for the two-dimensional parallactic images are vertical and horizontal directions (full-parallax).

12. The hologram production system according to claim 8,
wherein data are transmitted from two or more places located apart where steps [1] and [2] are conducted, and hologram production is centered on the exposure apparatus installed in one place.
